# EUROPEAN PATENT APPLICATION

(11) **EP 4 187 252 A1**
(43) Date of publication of application: **31.05.2023**
(21) Application number: 22210085.1
(22) Date of filing: 29.11.2022
(51) Int. Cl.: G01N 35/02, G01N 35/10, G01N 35/00

(54) **QUALITY CONTROL SAMPLE MEASUREMENT METHOD, SAMPLE ANALYZER, AND SUPPLY DEVICE**

(30) Priority: 30.11.2021 JP 2021195015
(71) Applicant: SYSMEX CORPORATION, Kobe-shi Hyogo 651-0073 (JP)
(72) Inventor: Ikuta, Junya, Kobe-shi, Hyogo, 651-0073 (JP); Nakanishi, Noriyuki, Kobe-shi, Hyogo, 651-0073 (JP); Yao, Syunsuke, Kobe-shi, Hyogo, 651-0073 (JP); Kumagai, Atsushi, Kobe-shi, Hyogo, 651-0073 (JP)
(74) Representative: Hoffmann Eitle

(57) **Abstract**

A quality control sample measurement method, a sample analysis device and a supply device capable of normally acquiring a measurement result of a quality control sample are provided. The quality control sample measurement method for measuring a quality control sample stored in a cold state includes a step of stirring the quality control sample in a first operation mode (step S2) and a step of measuring the stirred quality control samples (step S3). The stirring in the first operation mode differs from the stirring in the second operation mode for stirring the subject sample collected from the subject.

## Description

### CROSS REFERENCE TO RELATED APPLICATIONS

This application claims priority from prior Japanese Patent Application(s) No. 2021-195015, filed on November 30, 2021, entitled "QUALITY CONTROL SAMPLE MEASUREMENT METHOD, SAMPLE ANALYZER, AND SUPPLY DEVICE", the entire contents of which are incorporated herein by reference.

### FIELD OF THE INVENTION

The present invention relates to a quality control sample measurement method, a sample analyzer and a supply device.

### BACKGROUND

Conventionally, quality-control samples are measured periodically in a sample analyzer, so that appropriate measurement results can be obtained. The quality control sample is a sample containing components at a known concentration, and is, for example, blood artificially adjusted so that blood components such as erythrocytes, leukocytes, and platelets have a known concentration. In internal quality control, which is one of the quality control methods, the measurement accuracy of the sample analyzer is measured by repeatedly measuring the quality control sample of the same lot and checking whether the fluctuation of the measured values remain within the allowable range.

The following Japanese Patent Application Publication No. 2005-274289 describes a blood sample transport analysis system in which a control sample (quality control sample) stored in a cold storage is transported to an analyzer by a transport device and measured by the analyzer.

### SUMMARY OF THE INVENTION

Japanese Patent Application Publication No. 2005-274289 does not describe stirring of the quality-control sample in order to correctly obtain the measurement result of the quality-control sample. If the quality control sample stored in the cooling unit is measured without proper stirring, the measurement result of the quality control sample may not be obtained normally.

The present invention provides a quality control sample measurement method, a sample analysis device, and a supply device capable of normally acquiring measurement results of a quality control sample.

The quality control sample measurement method of the present invention relates to a quality control sample measurement method for measuring a quality control sample that has been cooled and stored. The quality control sample measurement method of the present invention includes a step of stirring the quality control sample in a first operation mode (step S2), and a step of measuring the stirred quality control sample (step S3). The stirring in the first operation mode differs from the stirring in the second operation mode for stirring the subject sample collected from the subject.

The quality control sample is a sample containing a known component at a known concentration, and is used to control the measurement accuracy of the subject sample collected from the subject.

If the quality control sample is stirred in the same manner as the subject's sample, the quality control sample will not be sufficiently agitated due to, for example, the influence of pseudo-ingredients contained in the quality control sample and the effect of long-term storage at low temperature such that the sample may be measured in a state wherein the blood cell component is not uniformly dispersed. If the measurement is performed in a state wherein the blood cell component is not dispersed, for example, a specific blood cell component may have a false high value, and the measurement result of the quality control sample cannot be obtained normally. Therefore, the present inventors have solved the above-mentioned problems by stirring and measuring the quality control sample in the first operation mode differently from the second operation mode for stirring the subject sample. According to the quality control sample measurement method of the present invention, it is possible to avoid insufficient stirring of the quality control sample, and it is possible to properly obtain the measurement result of the quality control sample.

The sample analyzer (1a) of the present invention is provided with a transport device (20) for transporting a container (110, T1, T2), and a measuring device (10) configured to stir and measure the stirred sample transported in the container (110, T1, T2) by the transport device (20). The measuring device (10) stirs a quality control sample in the container (110, T1) in the first operation mode when the container (110, T1) transported by the transport device (20) contains a quality control sample, and the measuring device (10) stirs a subject sample in the container (110, T2) in the second operation mode when the container (110, T2) transported by the transport device (20) contains a subject sample. Stirring in the first operation mode differs from stirring in the second operation mode.

According to the sample analyzer of the present invention, as in the above-mentioned quality control sample measurement method, it is possible to avoid insufficient stirring of the quality control sample, and it is possible to properly obtain the measurement result of the quality control sample.

The supply device (40) of the present invention relates to a supply device that supplies a quality control sample to a measuring device (10) that measures a sample. The supply device (40) of the present invention includes a storage (42) for cooling and storing a container (110, T1) containing a quality control sample, a stirring mechanism (46, 48, 49) for stirring the quality control sample in the container (110, T1) removed from the storage (42), and a take-out unit (41) for taking out the container (110, T1) containing the quality control sample stirred by the stirring mechanism (46, 48, 49) to the transport path (301).

According to the supply device of the present invention, the quality control sample is stirred by the stirring mechanism and then taken out to the transport path toward the measuring device. In this way, when the quality control sample is stirred in advance, the quality control sample can be sufficiently mixed by stirring before measurement in the measuring device. Therefore, even when the quality control sample is less likely to be mixed than the subject's sample, the measurement result of the quality control sample can be properly obtained by the measuring device.

According to the present invention, it is possible to avoid insufficient stirring of the quality control sample and obtain the measurement result of the quality control sample properly.

### BRIEF DESCRIPTION OF THE DRAWINGS

FIG. 1 is a diagram schematically showing a configuration of a sample analysis system according of the first embodiment;
FIG. 2 is a perspective view showing the configuration of a rack and a container according to the first embodiment;
FIG. 3 is a diagram schematically showing a mutual connection relationship in each device of the sample analysis system according to the first embodiment;
FIG. 4 is a plan view schematically showing a detailed configuration of a supply device according to the first embodiment;
FIG. 5 is a plan view schematically showing a detailed configuration of a transfer device according to the first embodiment;
FIG. 6 is a plan view schematically showing an internal configuration of a measuring device according to the first embodiment;
FIG. 7 is a side view schematically showing a detailed configuration of the stirring mechanism according to the first embodiment;
FIG. 8 is a side view schematically showing a detailed configuration of a stirring mechanism according to the first embodiment;
FIG. 9 is a side view schematically showing the inversion stirring performed on the container according to the first embodiment;
FIG. 10 is a side view schematically showing a detailed configuration of a reading unit according to the first embodiment;
FIG. 11 is a block diagram showing a configuration of a supply device according to the first embodiment;
FIG. 12 is a block diagram showing a configuration of a measuring device according to the first embodiment;
FIG. 13 is a flowchart illustrating a quality control sample measurement flow by a sample analyzer according to the first embodiment;
FIG. 14 is a diagram schematically showing that the posture of the container is changed when the blood cell component remains at the bottom of the container according to the first embodiment;
FIG. 15 is a diagram showing details of stirring in the first operation mode and stirring in the second operation mode according to the first embodiment;
FIG. 16 is a flowchart showing a process of changing the posture of a container containing a quality control sample according to the first embodiment;
FIG. 17 is a flowchart showing a sample analysis process by a control device according to a first modification of the first embodiment;
FIG. 18 is a diagram showing details of stirring in the first operation mode 1A, the first operation mode 1B, and the second operation mode according to a second modification of the first embodiment;
FIG. 19 is a flowchart showing a sample analysis process by the control device according to the second modification of the first embodiment;
FIG. 20 is a flowchart showing a sample analysis process by the control device according to a third modification of the first embodiment;
FIG. 21 is a flowchart showing a sample analysis process by the control device according to a fourth modification of the first embodiment;
FIG. 22 is a graph schematically showing the number of times of stirring according to the fourth modification of the first embodiment;
FIG. 23 is a flowchart showing a sample analysis process by the control device according to a fifth modification of the first embodiment;
FIG. 24 is a graph schematically showing the number of times of stirring according to the fifth modification of the first embodiment;
FIG. 25 is a diagram showing details of stirring in the first operation mode and stirring in the second operation mode according to a second embodiment;
FIG. 26 is a plan view schematically showing a detailed configuration of a supply device according to the second embodiment;
FIG. 27 is a side view schematically showing a detailed configuration of a rotation mechanism and a stirring mechanism according to the second embodiment;
FIG. 28 is a flowchart showing a stirring and transporting process by the supply device according to the second embodiment;
FIG. 29 is a flowchart showing a process for changing the posture of a container containing a quality control sample in preliminary stirring according to the second embodiment;
FIG. 30 is a side view schematically showing a detailed configuration of a support mechanism and a stirring mechanism according to a first modification of the second embodiment;
FIG. 31 is a side view schematically showing a detailed configuration of a heating and stirring mechanism according to a second modification of the second embodiment;
FIG. 32 is a plan view schematically showing a detailed configuration of the heating and stirring mechanism according to the second modification of the second embodiment;
FIG. 33 is a flowchart showing a stirring and transporting process by a supply device according to the second modification of the second embodiment; and
FIG. 34 is a diagram schematically showing a configuration of a sample analysis system according to a third embodiment.

### DESCRIPTION OF THE EMBODIMENTS OF THE INVENTION

### First Embodiment

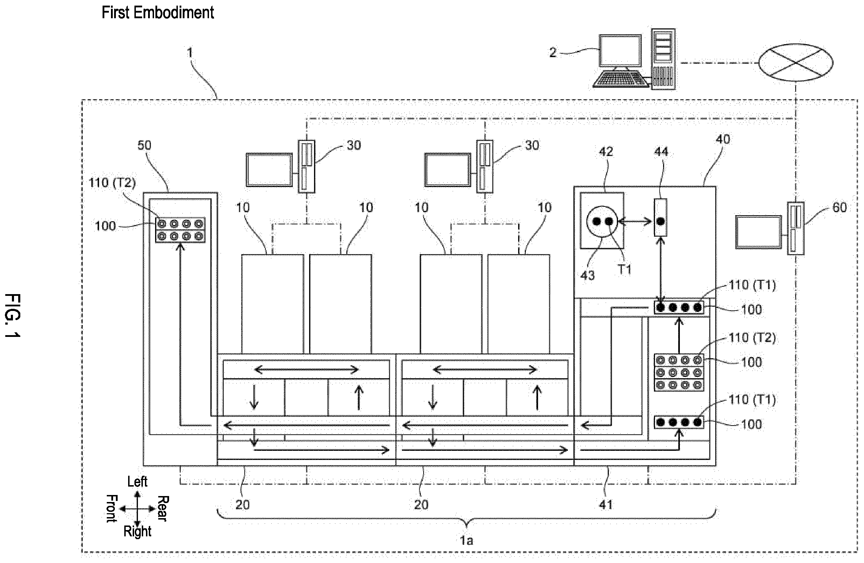

FIG. 1 is a diagram schematically showing the configuration of a sample analysis system 1.

FIG. 1 shows the configuration of the measuring device 10, the transport device 20, the supply device 40, and the recovery device 50 in a plan view, and shows the vertical and horizontal directions in the plan view. In FIG. 1, a communication cable for communicating between devices is shown by a chain double-dashed line. Also in FIG. 1, the transport direction of the rack 100 is indicated by an arrow, the downstream direction is the left direction, and the upstream direction is the right direction.

The sample analysis system 1 includes a sample analysis device 1a, a collection device 50, and a transfer control device 60. The sample analyzer 1a includes two sets which include two measuring devices 10, one transport device 20, and one control device 30. The sample analyzer 1a also includes a supply device 40. The sample analysis system 1 is communicably connected to an external host computer 2.

The sample analysis system 1 is a system that automatically measures a subject sample and a quality control sample collected from a subject, and analyzes the sample based on the acquired measurement data. The subject sample is whole blood collected from a subject in the first to third embodiments. The quality control sample is a sample containing a known component at a known concentration, and is used to control the measurement accuracy of the subject sample. The quality control sample is, more specifically, so-called control blood containing blood cell components contained in whole blood, for example, red blood cells, leukocytes and platelets at known concentrations. The quality control sample is, for example, XN-CHECK (registered trademark) (manufactured by Sysmex Corporation). The composition of the quality control sample is disclosed, for example, in US Pat. No. 6,221,668. Quality control samples are divided into three types, LV1 to LV3, corresponding to three concentration levels of the blood cell components contained therein, include level 1 containing components with a lower concentration than the sample (healthy blood) collected from healthy subjects, level 2 containing components similar to healthy blood, and level 3 containing components having a higher concentration than that of healthy blood. In the following, when simply referred to as "sample", this sample is a concept including both a subject sample and a quality control sample.

The measuring device 10 stirs the sample in the container 110 conveyed from the supply device 40, and measures the stirred sample. The measuring device 10 counts blood cells in the subject sample and counts particles in the quality control sample. The transport device 20 transports the rack 100 holding the container 110 taken out from the storage 42 by the supply device 40 to the measuring device 10. The transport device 20 also transports the rack 100 removed from the upstream device to the downstream device, and transports the rack 100 that has been measured to the downstream device or the upstream device. The control device 30 controls two corresponding measuring devices 10 so that the sample is measured, receives measurement data from the two corresponding measuring devices 10, and analyzes the sample.

Note that FIG. 1 shows two sets including two measuring devices 10, one transport device 20, and one control device 30, and although the sample analysis system 1 includes one such set, one may be included, or three or more may be included. In FIG. 1, although the set including the measuring device 10, the transport device 20, and the control device 30 includes two measuring devices 10, a single measuring device 10 may be included or three or more measuring devices 10 may be included.

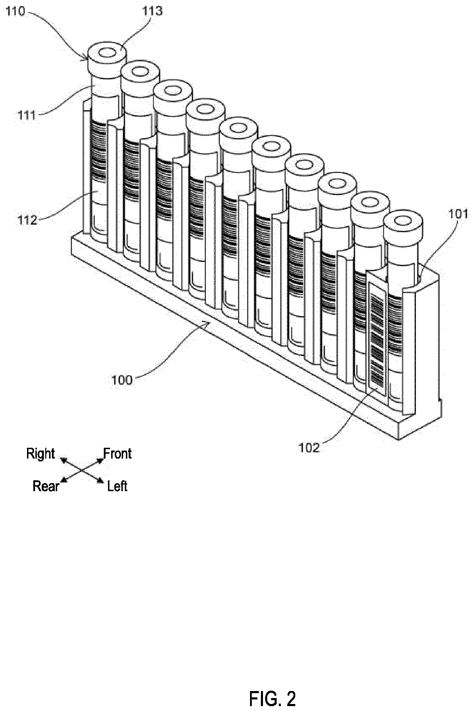

FIG. 2 is a perspective view showing the configuration of the rack 100 and the container 110.

The rack 100 includes 10 holding parts 101 capable of holding the container 110 vertically, and a barcode label 102. The barcode label 102 is attached to the rear surface of the rack 100. A barcode indicating the rack ID is printed on the barcode label 102 as identification information that individually identifies the rack 100.

The container 110 includes a body part 111, a barcode label 112, and a lid 113. The body part 111 is a tubular container having an open upper end, and houses a quality control sample or a subject sample inside. The barcode label 112 is affixed to the side surface of the body part 111. A barcode indicating the sample ID is printed on the bar code label 112 as identification information that individually identifies the quality control sample or the test subject sample housed inside. The lid 113 is configured so that a piercer 441, which will be described later, can penetrate vertically, and is installed at the upper end of the body part 111 so as to seal the inside of the body part 111.

Returning to FIG. 1, the rack 100 has either a container 110 (hereinafter referred to as "container T1") containing a quality control sample or a container 110 (hereinafter referred to as "container T2") containing a subject sample; only one or the other is held. In FIG. 1, for convenience, the container T1 is indicated by a black circle and the container T2 is indicated by a double circle. FIG. 1 also shows a state in which four containers 110 are held in one rack 100 for convenience.

The supply device 40 supplies the quality control sample and the subject sample to the measuring device 10 that measures the sample. The supply device 40 is installed adjacent to the upstream side of the rightmost transport device 20. The supply device 40 includes a take-out unit 41, a storage 42, a cooling unit 43, and a heating unit 44.
The take-out unit 41 conveys the rack 100 in the supply device 40, and carries out the conveyed rack 100 to the transport device 20 adjacent to the downstream side. The storage 42 cools and stores the container T1. The quality control sample is stored in the storage 42 within the container T1. The storage 42 can store a predetermined number of (for example, 9) containers T1. The cooling unit 43 cools the container T1 in the storage 42. The heating unit 44 heats the container T1 taken out from the storage 42. When measuring a quality control sample, the container T1 is taken out from the storage 42 and returned to room temperature by the heating unit 44.

The container T1 returned to room temperature by the heating unit 44 is transferred to the rack 100 of the take-out unit 41. After that, the rack 100 holding the container T1 is carried out to the transport device 20 by the take-out unit 41. On the other hand, when measuring a subject sample, the container T2 is set in the rack 100 in advance by the operator, and the rack 100 holding the container T2 is placed in the take-out unit 41. After that, the rack 100 holding the container T2 is carried out to the transport device 20 by the take-out unit 41.

The take-out unit 41, the two transfer devices 20 and the recovery device 50 are arranged side by side in the left-right direction so that the rack 100 can be delivered. The rack 100 removed from the take-out unit 41 is carried to the measuring device 10 serving as the transport destination in accordance with the instruction of the transport control device 60. The measuring device 10 measures the sample in the container 110 held in the rack 100.

When the measurement for the rack 100 holding the container T1 is completed, the rack 100 is conveyed to the right by the transport device 20 and is conveyed to the take-out unit 41. After that, the container T1 held in the rack 100 is transferred to the storage 42 again and stored in the storage 42 in a cold state. On the other hand, when the measurement for the rack 100 holding the container T2 is completed, the rack 100 is transported to the left by the transport device 20 and is transported to the recovery device 50. In this way, the container T2 containing the subject sample for which the measurement has been completed is collected by the collection device 50.

The transport control device 60 is a device for controlling the transport of the rack 100, and determines the transport destinations of the rack 100 that holds the container T1 and the rack 100 that holds the container T2.

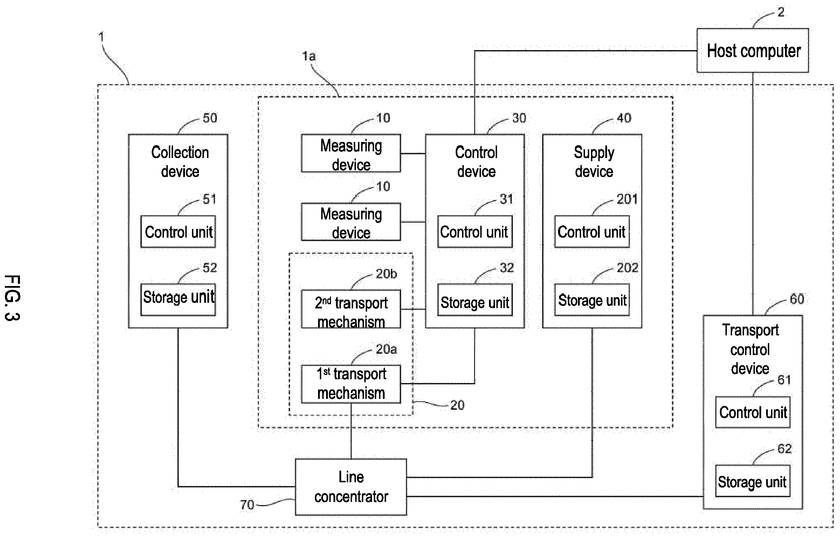

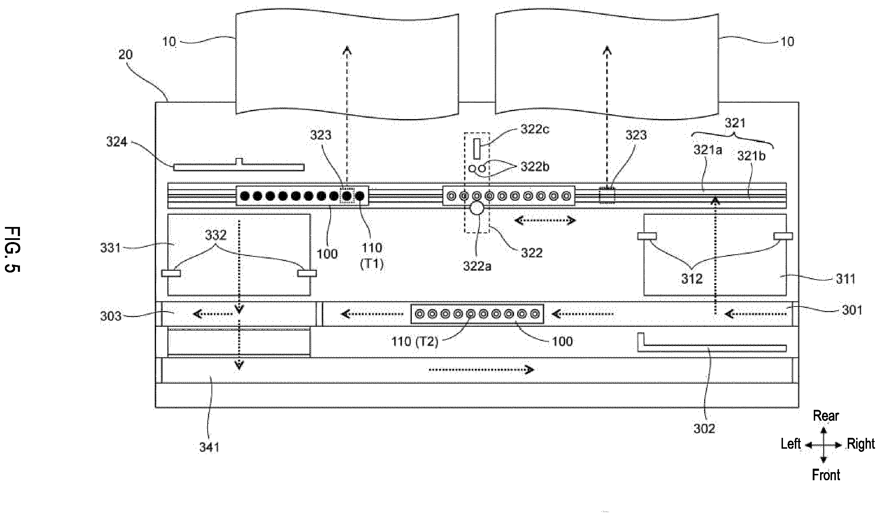

FIG. 3 is a diagram schematically showing a mutual connection relationship in each device of the sample analysis system 1. In FIG. 3, for convenience, only one set including two measuring devices 10, one transport device 20, and one control device 30 is shown.
The transport device 20 includes a first transport mechanism 20a and a second transport mechanism 20b. The first transport mechanism 20a is controlled by the transport control device 60, and the second transport mechanism 20b is controlled by the control device 30. The configuration of the transport device 20 will be described later with reference to FIG. 5.

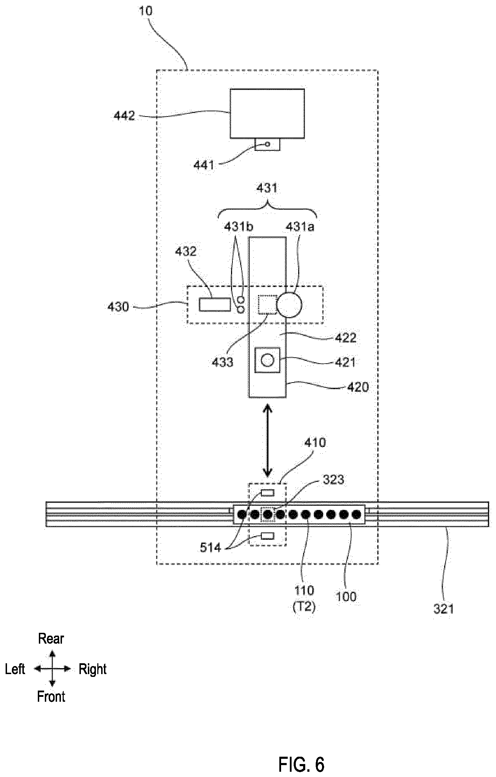

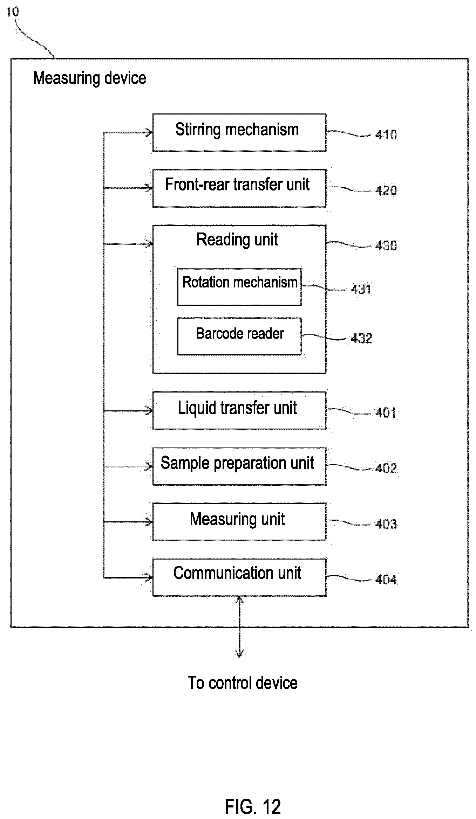

The control device 30 includes a control unit 31 and a storage unit 32. The control unit 31 is composed of, for example, a processor such as a CPU or FPGA. The storage unit 32 is composed of, for example, an SSD, an HDD, a RAM, or the like. The control device 30 is communicably connected to the corresponding two measuring devices 10 and one transport device 20. The configuration of the measuring device 10 will be described later with reference to FIGS. 6 and 12.

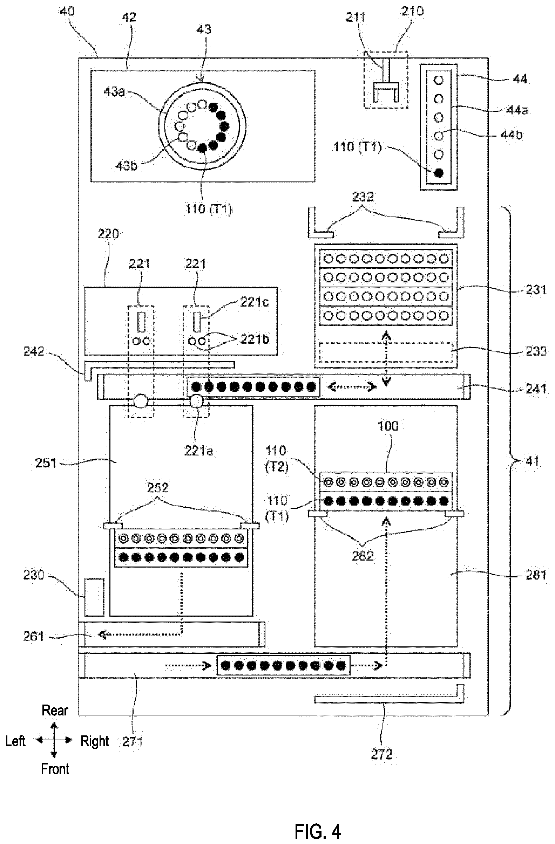

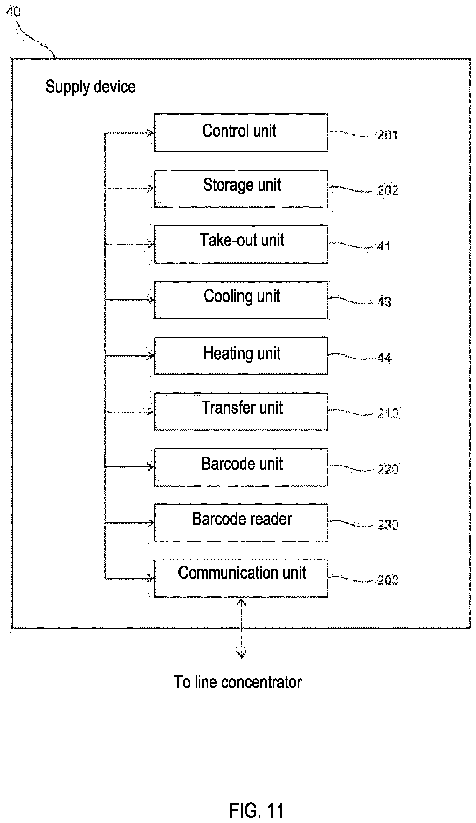

The supply device 40 includes a control unit 201 and a storage unit 202. The control unit 201 is composed of, for example, a processor such as a CPU or FPGA. The storage unit 202 is composed of, for example, an SSD, an HDD, a RAM, or the like. The configuration of the supply device 40 will be described later with reference to FIGS. 4 and 11.

The recovery device 50 includes a control unit 51 and a storage unit 52. The control unit 51 is composed of, for example, a processor such as a CPU or FPGA. The storage unit 52 is composed of, for example, an SSD, an HDD, a RAM, or the like.

The transport control device 60 includes a control unit 61 and a storage unit 62. The control unit 61 is composed of, for example, a processor such as a CPU or FPGA. The storage unit 62 is composed of, for example, an SSD, an HDD, a RAM, or the like. The control unit 61 of the transport control device 60 controls the transfer of the rack 100 by communicating with the first transfer mechanism 20a, the supply device 40, and the recovery device 50 via the line concentrator 70.

The line concentrator 70 is composed of, for example, a switching hub. The line concentrator 70 is communicably connected to the first transport mechanism 20a, the supply device 40, the recovery device 50, and the transport control device 60. The control device 30 and the transport control device 60 are communicably connected to the host computer 2 via a communication network.

FIG. 4 is a plan view schematically showing a detailed configuration of the supply device 40.

The supply device 40 includes a take-out unit 41, a storage 42, a cooling unit 43, a heating unit 44, a transfer unit 210, a bar code unit 220, and a bar code reader 230.
The cooling unit 43 includes a Perche element, a heat sink connected to the Perche element, and a heat conductive member 43a installed on the upper surface side of the Perche element. The heat conductive member 43a has a circular shape. The heat conductive member 43a is formed with a plurality of holding portions 43b capable of vertically holding the container T1 in the circumferential direction. By driving the Pelche element so that the heat conductive member 43a is cooled, the quality control sample in the container T1 held by the holding part 43b is cooled.

The heating unit 44 includes an aluminum block heater 44a. The aluminum block heater 44a is formed with a plurality of holding parts 44b capable of vertically holding the container T1 in the front-rear direction. By driving the Pelche element so that the aluminum block heater 44a is heated, the quality control sample in the container T1 held by the holding parts 44b is heated.

The transfer unit 210 includes a grip unit 211 that grips the container T1. The transfer unit 210 also includes a mechanism for moving the grip unit 211 in the front-rear direction, the left-right direction, and the up-down direction. When the container T1 in the storage 42 is measured, the transfer unit 210 transfers the container T1 in the storage 42 to the holding part 44b of the heating unit 44.

Here, when the temperature of the place where the supply device 40 is installed is normal temperature, for example, a predetermined temperature (20°C to 25°C) or higher, the temperature of the container T1 transferred from the storage 42 to the heating unit 44 is raised by being left in the holding unit 44b for a predetermined time in a state in which the Pelche element of the aluminum block heater 44a is not driven. In this way the temperature of the quality control sample in the container T1 is raised to room temperature. On the other hand, when the temperature of the place where the supply device 40 is installed is lower than the predetermined temperature, the Pelche element of the aluminum block heater 44a is driven, and the container T1 transferred from the storage 42 to the heating unit 44 is heated by the heat of heating unit 44 for a predetermined time. In this way the temperature of the quality control sample in the container T1 is raised to room temperature.

When the container T1 is brought to room temperature in the heating unit 44, the transfer unit 210 transfers the container T1 to the rack 100 located at the front position 233 of the first rack storage unit 231.

The take-out unit 41 includes a first rack storage unit 231, a transport arm 232, a first transport path 241, a rack feeding unit 242, a second rack storage unit 251, a rack delivery unit 252, a second transport path 261, a third transport path 271, a rack feeding unit 272, a third rack storage unit 281, and a rack delivery unit 282.

The first rack storage unit 231 is composed of a plate member whose upper surface is parallel to the horizontal plane. The transport arm 232 pulls the rack 100 at the right end of the first transport path 241 into the first rack storage unit 231 and feeds the rack 100 on the first rack storage unit 231 into the first transport path 241.

The first transport path 241 is composed of a conveyor belt that moves in the left-right direction, and transports the rack 100 fed from the first rack storage unit 231 and the third rack storage unit 281 in the left-right direction. The rack feeding unit 242 feeds the rack 100 at the left end of the first transport path 241 to the second rack storage unit 251. The second rack storage unit 251 is composed of a plate member whose upper surface is parallel to the horizontal plane. The rack delivery unit 252 transmits the rack 100 on the second rack storage unit 251 to the second transport path 261. The second transport path 261 is configured by a conveyor belt that moves in the left-right direction, and the rack 100 taken out from the second rack storage unit 251 is delivered to the left side of the supply device 40 in the first transport path 301 of the transport device 20 (see FIG. 5).

The third transport path 271 is configured by a conveyor belt that moves in the left-right direction, and delivers the rack 100 transported from the third transport path 341 (see FIG. 5) of the transport device 20 connected to the left side of the supply device 40 to the right. The rack feeding unit 272 feeds the rack 100 at the right end of the third transport path 271 to the third rack storage unit 281. The third rack storage unit 281 is configured by a plate member having an upper surface that is parallel to the horizontal plane. The rack delivery unit 282 transmits the rack 100 on the third rack storage unit 281 to the first transport path 241.

The bar code unit 220 reads the bar code labels 102 and 112 relative to the rack 100 at the left end of the first transport path 241. The barcode unit 220 includes two reading units 221 that move in the left-right direction. The reading unit 221 includes a driving roller 221a that rotates the container 110 held by the rack 100 in the circumferential direction, two driven rollers 221b that rotatably hold the container 110 from the opposite side of the driving roller 221a, and the driving roller 221a and the driven roller 221a, and a bar code reader 221c for reading the bar code label 112 of the container 110 sandwiched by the rollers 221b. The reading unit 221 on the left side reads the barcode label 102 of the rack 100. Note that the configuration of the reading unit 221 is substantially the same as that of the reading unit 430 provided in the measuring device 10 described later.

The bar code reader 230 reads the bar code label 102 of the rack 100 which is taken out to the left by the second transport path 261.

The transfer operation of the rack 100 by the take-out unit 41 will be described hereinafter.

After the container T1 is moved from the heating unit 44 to the holding unit 101 of the rack 100 located at the front position 233 of the first rack storage unit 231, the transfer of the rack 100 is started. In this way the rack 100 is fed to the right end of the first transport path 241 and is transported to the front of the barcode unit 220 via the first transport path 241. After the barcode labels 102 and 112 are read by the barcode unit 220, the rack 100 is fed to the second rack storage unit 251 by the rack feeding unit 242, and is conveyed to the second transport path 261 along the second rack storage unit 251. Then, after the barcode label 102 is read by the barcode reader 230, the rack 100 is taken out to the transport device 20 adjacent to the left side.

When the measurement operation is completed for the quality control sample of the container T1 held in the rack 100, the rack 100 is transported from the transport device 20 adjacent to the left side of the supply device 40 to the third transport path 271. The rack 100 is conveyed to the right by the third transport path 271, fed to the third rack storage unit 281 by the rack feeding unit 272, and transported to the first transport path 241 along the third rack storage unit 281. The rack 100 is transported to the front of the barcode unit 220 by the first transport path 241, and the barcode labels 102 and 112 are read again. Thereafter, the rack 100 is transported to the right end of the first transport path 241 and is positioned at the front position 233 of the first rack storage unit 231 by the transport arm 232.

After that, when all the containers T1 held in the rack 100 at the front position 233 are transferred to the holding unit 43b of the storage 42 by the transfer unit 210, the empty rack 100 is sent to the rear of the first rack storage unit 231 by the transport arm 232.

The rack 100 in which the container T2 for accommodating the subject sample is held is placed in the third rack storage unit 281 by the operator, and then the transport is started. In this way the rack 100 is taken out to the transport device 20 adjacent to the left side via the first transport path 241, the second rack storage unit 251 and the second transport path 261. At this time, the barcode labels 102 and 112 are read by the barcode unit 220 and the barcode reader 230, as in the rack 100 holding the container T1. When the measurement operation is completed for the subject sample in the container T2 held in the rack 100, the rack 100 is transported to the left as described above and collected by the collection device 50 (see FIG. 1).

FIG. 5 is a plan view schematically showing a detailed configuration of the transport device 20.

The transport device 20 includes a first transport path 301, a rack transfer unit 302, a rack transport path 303, a first rack storage unit 311 and a rack delivery unit 312, a second transport path 321 and a reading unit 322, a rack feeding unit 324, a second rack storage unit 331, a rack feeding unit 332, and a third transport path 341.

The first transport mechanism 20a of FIG. 3 includes a first transport path 301, a rack transfer unit 302, a rack transport path 303, a second rack storage unit 331, a rack delivery unit 332, and a third transport path 341. The second transport mechanism 20b of FIG. 3 includes a first rack storage unit 311, a rack delivery unit 312, a second transport path 321, a reading unit 322, and a rack feeding unit 324.

The first transport path 301 is composed of a conveyor belt that moves in the left-right direction, and transports the rack 100 carried out from the supply device 40 or the transport device 20 adjacent to the right side in the left direction. The rack feeding unit 302 feeds the rack 100 at the right end of the first transport path 301 into the first rack storage unit 311. The first rack storage unit 231 is composed of a plate member whose upper surface is parallel to the horizontal plane. The rack delivery unit 312 moves the rack 100 on the first rack storage unit 311 to the second transport path 321.

The second conveyor 321 is configured byf two conveyor belts 321a and 321b that move independently in the left-right direction, and conveys the rack 100 on the second conveyor 321 in the left-right direction. The reading unit 322 includes a main roller 322a, two driven rollers 322b, and a barcode reader 322c. The configuration of the reading unit 322 is substantially the same as that of the reading unit 430 provided in the measuring device 10 described later. The reading unit 322 reads the barcode label 102 of the rack 100 and the barcode label 112 of the container 110 on the second transport path 321.

Two take-out positions 323 are provided on the second transport path 321 for the two measuring devices 10 to take out the container 110 from the rack 100, respectively. The measuring device 10 sequentially takes out the container 110 held by the holding unit 101 of the rack 100 at the take-out position 323, moves out the container 110 into the measuring device 10, suctions and stirs the sample in the container 110, and measures the sample in the container 110. When the suction of the moved container 110 is completed, the measuring device 10 returns the container 110 to the original holding unit 101 of the rack 100.

When all the containers 110 held in the rack 100 do not need to be measured by the two measuring devices 10 located behind the second transport path 321, the rack 100 is transported to the left end of the second transport path 321, then moved to the second rack storage unit 331 by the rack feeding unit 272. The second rack storage unit 331 is configured by a plate member whose upper surface is parallel to the horizontal plane. The rack delivery unit 332 transports the rack 100 on the second rack storage unit 331 to the rack transport path 303 or the third transport path 341 arranged to the left of the first transport path 301.

The rack transport path 303 is composed of a conveyor belt that moves in the left-right direction. When it is necessary to measure any of the containers 110 held in the rack 100 by the measuring device 10 on the downstream side, the rack transport path 303 takes out the rack 100 to the transport device 20 adjacent to the left side. Even when all the containers T2 held in the rack 100 do not need to be further measured, the rack transport path 303 carries the rack 100 to the transport device 20 or the recovery device 50 adjacent to the left side.

The third transport path 341 is composed of a conveyor belt that moves in the left-right direction. If no further measurement is required for all the containers T1 held in the rack 100, the third transport path 341 receives the rack 100 holding the container T1 from the second rack storage unit 331 and the transport device 20 adjacent to the left side, transports the received rack 100 to the right, and the transport device adjacent to the right side. Carry out to 20 or the supply device 40.

FIG. 6 is a plan view schematically showing the internal configuration of the measuring device 10. In FIG. 6, for convenience, the second transport path 321 of the transport device 20 is also shown.

The measuring device 10 includes a stirring mechanism 410, a front-rear transfer unit 420, a reading unit 430, a piercer 441, and a piercer drive unit 442.

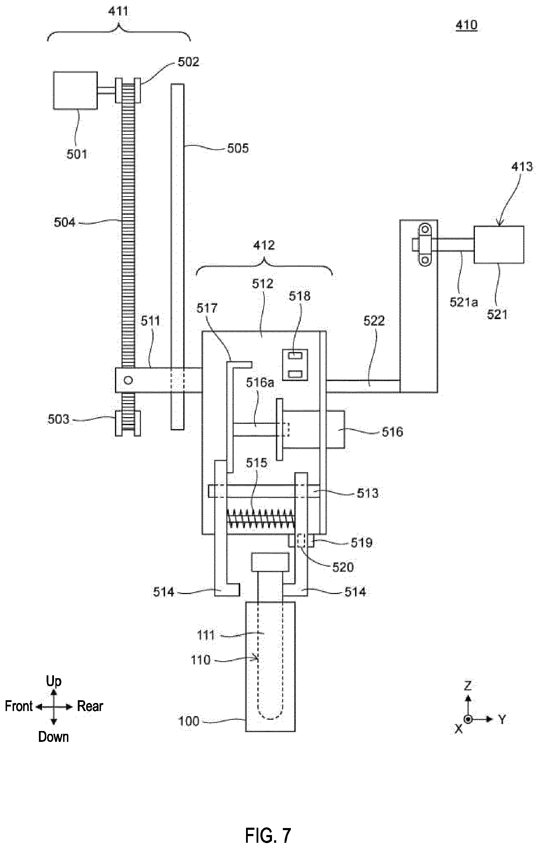

The stirring mechanism 410 includes a pair of grips 514 that sandwich the container 110 from the front-rear direction. The stirring mechanism 410 moves the pair of grips 514 upward by the vertical drive mechanism 411 (see FIG. 7) in a state in which the container 110 positioned at the take-out position 323 is gripped by the pair of grips 514, and the rotation mechanism 410 rotates the container 110 so that it is tilted by rotation mechanism 413 (see FIG. 7). In this way the sample in the container 110 is agitated.

The front-rear transfer unit 420 includes a holding unit 421 capable of vertically holding the container 110, a plate member 422 that supports the holding unit 421 and extends in the front-rear direction, and a mechanism for moving the plate member 422 in the front-rear direction. When the stirring operation by the stirring mechanism 410 is completed, the plate member 422 is transferred forward so that the holding unit 421 overlaps the take-out position 323 in a plan view. In this state, the stirring mechanism 410 moves the pair of grips 514 downward, and sets the gripped container 110 in the holding unit 421. Thereafter, the holding unit 421 is transferred rearward and positioned at the reading position 433 of the reading unit 430.

The reading unit 430 includes a rotation mechanism 431 and a bar code reader 432. The rotation mechanism 431 includes a main roller 431a for rotating the container 110 at the reading position 433, and a pair of driven rollers 431b for sandwiching the container 110 at the reading position 433 between the main rollers 431a. When the container 110 is positioned at the reading position 433, the container 110 is rotated by the rotation mechanism 431, and the barcode label 112 of the container 110 is read by the barcode reader 432.

After that, the holding unit 421 is further transferred rearward, and the container 110 held by the holding unit 421 is positioned directly below the piercer 441. The piercer 441 is a highly rigid suction tube extending in the vertical direction. The piercer drive unit 442 moves the piercer 441 in the vertical direction. When the container 110 is positioned directly below the piercer 441, the piercer 441 is moved downward so that the lower end of the piercer 441 penetrates the lid 113 of the container 110. The tip of the piercer 441 is lowered to the vicinity of the bottom of the container 110. Then, the sample in the container 110 is suctioned through the piercer 441.

When the suction of the sample to the container 110 is completed, the container 110 is conveyed forward by the front-rear transfer unit 420 to a position overlapping the take-out position 323 in plan view, and is gripped by the stirring mechanism 410 at this position and lifted upward. Then, the holding unit 421 and the plate member 422 are transferred rearward, and the stirring mechanism 410 returns the container 110 to the original holding unit 101 of the rack 100.

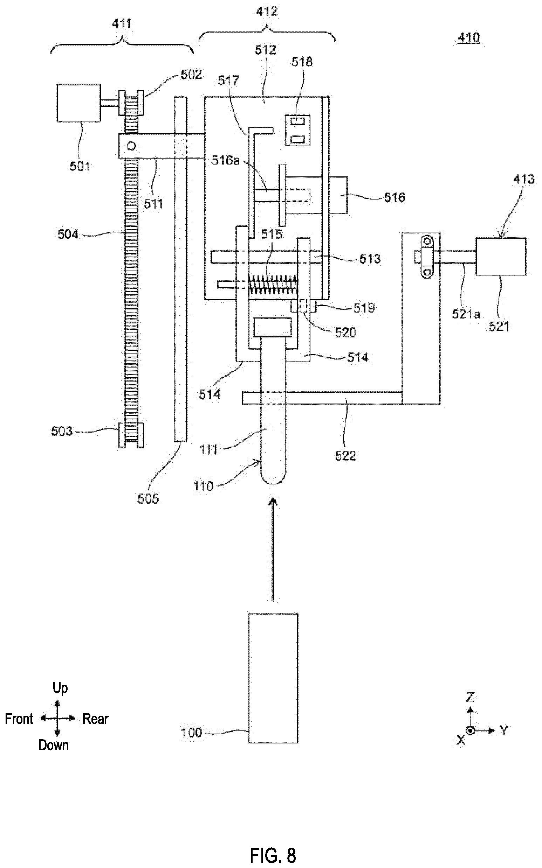

FIGS. 7 and 8 are side views schematically showing a detailed configuration of the stirring mechanism 410.

As shown in FIG. 7, the stirring mechanism 410 includes a vertical drive mechanism 411, a gripping mechanism 412, and a rotation mechanism 413. The rotation mechanism 413 is installed at a position at which it does not come into contact with the gripping mechanism 412.

The vertical drive mechanism 411 moves the gripping mechanism 412 in the vertical direction. The vertical drive mechanism 411 includes a motor 501, pulleys 502 and 503, a belt 504, and a rail 505.

The motor 501 is configured by a stepping motor. The pulley 502 is installed on a shaft extending in the front-rear direction of the motor 501. The pulley 503 is installed in the downward direction of the pulley 502. The belt 504 is connected to the pulleys 502 and 503 and moves up and down according to the drive of the motor 501. The rail 505 extends in the vertical direction.

The gripping mechanism 412 includes a connecting member 511, a substrate 512, a shaft 513, a pair of gripping units 514, a spring 515, a cylinder 516, a plate member 517, a transmissive sensor 518, a magnet 519, and a metal member 520.

The left end of the connecting member 511 is fixed to the belt 504. When the belt 504 moves in the vertical direction, the connecting member 511 moves in the vertical direction along the rail 505 while being supported by the rail 505. The connecting member 511 is fixed to the substrate 512.

The shaft 513 extends in the front-rear direction and is fixed to the substrate 512. The pair of grips 514 are installed on the shaft 513 so as to be rotatable about the shaft 513. The rear grip portion 514 is installed on the shaft 513 so as not to move in the front-rear direction, and the front grip portion 514 is installed on the shaft 513 so as to move in the front-rear direction. Both ends of the spring 515 are installed on two surfaces of the pair of grips 514 facing each other. The spring 515 applies a force to the pair of grips 514 in a direction in which the pair of grips 514 are separated from each other.

The cylinder 516 drives the rod 516a in the front-rear direction. The plate member 517 is fixed to the left end of the rod 516a and the upper end of the grip 514 on the front side. When the rod 516a moves rearward from the state of FIG. 7, the grip 514 on the front side moves rearward, and the container 110 held by the rack 100 is gripped by the pair of grips 514. On the other hand, when the rod 516a moves forward from the state where the container 110 is gripped, the grip 514 on the front side moves forward, and the gripped state of the container 110 by the pair of grips 514 is released as shown in FIG. 7.

When the rod 516a moves in the front-rear direction, the upper end of the plate member 517 moves in the front-rear direction. If there is no container 110 between the pair of grips 514, the upper end of the plate member 517 is positioned between the transmissive sensors 518 when the gripping operation is performed. In this way that the container 110 was not gripped by the pair of grips 514 can be detected.

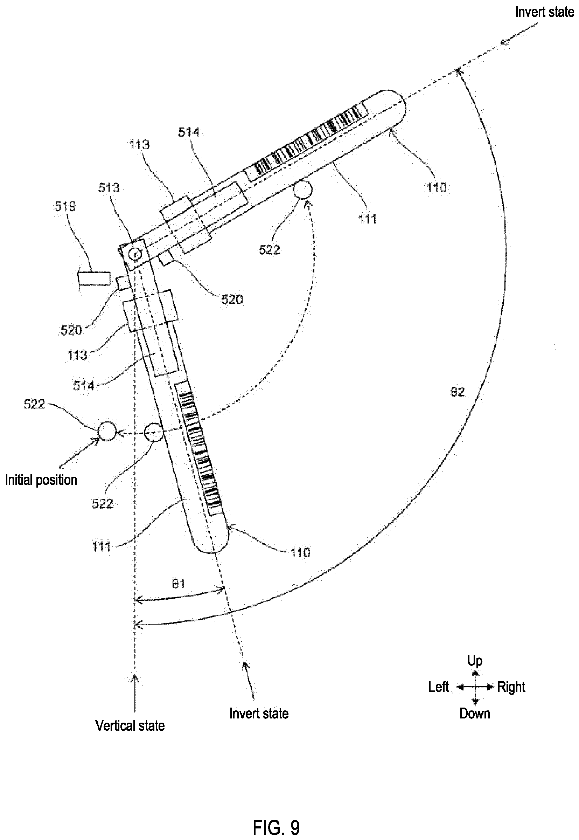

The magnet 519 is installed at the lower end of the substrate 512. The metal member 520 is a material that is attracted to the magnet 519 and is made of, for example, iron. The metal member 520 is installed on the left side surface (see FIG. 9) of the grips 514 on the rear side. As shown in FIG. 7, in a normal state in which the pair of grips 514 extend in the vertical direction, the magnet 519 and the metal member 520 are in contact with each other. When the motor 501 is driven and the gripping mechanism 412 is moved upward while the container 110 is gripped by the pair of grips 514, the container 110 is taken out from the rack 100 as shown in FIG. 8.

As shown in FIG. 8, the rotation mechanism 413 includes a motor 521 and an contact member 522. The motor 521 is configured by a stepping motor. The shaft 521a of the motor 521 extends in the front-rear direction and is located on the extension of the shaft 513 of the gripping mechanism 412. The contact member 522 is fixed to the shaft 521a of the motor 521. By driving the motor 521, the contact member 522 rotates about the shaft 521a.

When the container 110 is agitated, as shown in FIG. 8, the container 110 is moved upward while being gripped by the pair of grips 514. At this time, the contact member 522 is positioned on the left side of the container 110. Then, when the motor 521 is driven in the state shown in FIG. 8, the container 110 is inverted around the shaft 513 stirring the sample in the container 110 by the body 111 of the container 110 being pushed by the contact member 522.

FIG. 9 is a side view schematically showing the inverting/stirring performed on the container 110.

Hereinafter, the position of the contact member 522 when the contact member 522 comes into contact with the left side surface of the container 110 in the vertical state is referred to as an "initial position". The state of the container 110 when the longitudinal direction of the container 110 is oriented in the vertical direction is referred to as a "vertical state". The state in which the container 110 is rotated around the shaft 513 from the vertical state is referred to as an "inverting state".

When the contact member 522 rotates around the shaft 513 from the initial position when the container 110 is in the vertical state, the metal member 520 separates from the magnet 319 and the body 111 is pushed by the contact member 522. In this way the container 110 rotates around the shaft 513 and changes from the vertical state to the inverted state.

When the contact member 522 rotates around the shaft 513 toward the initial position when the container 110 is in the overturned state, the container 110 is supported by the contact member 522 and rotated around the shaft 513 toward the vertical state. When the container 110 is returned to the vertical state, the metal member 520 comes into contact with the magnet 519 by the magnetic force of the magnet 519. At this time, the metal member 520 is attracted to the magnet 519 and vigorously collides with the magnet 519, so that an impact is applied to the container 110 via the grips 514.

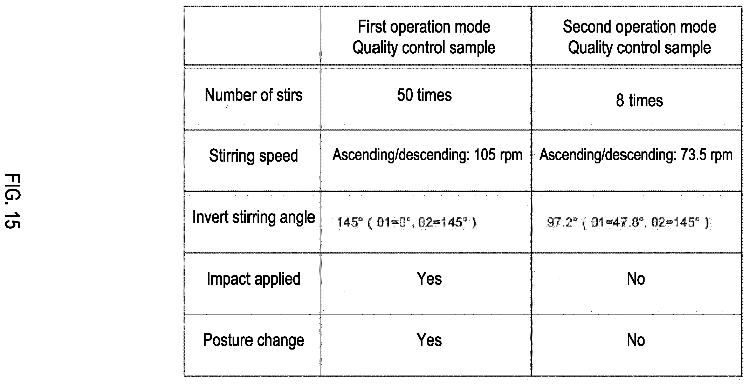

Here, the angle of the container 110 with respect to the vertical state is hereinafter referred to as a "invert angle". In the stirring of the sample in the container 110, the container 110 is repeatedly rotated between the state in which the invert angle of the container 110 is θ1 and the state in which the invert angle of the container 110 is θ2. The invert angles θ1 and θ2 differ depending on whether the sample contained in the container 110 is a quality control sample or a subject sample. The invert angles θ1 and θ2 will be described later with reference to FIG. 15.

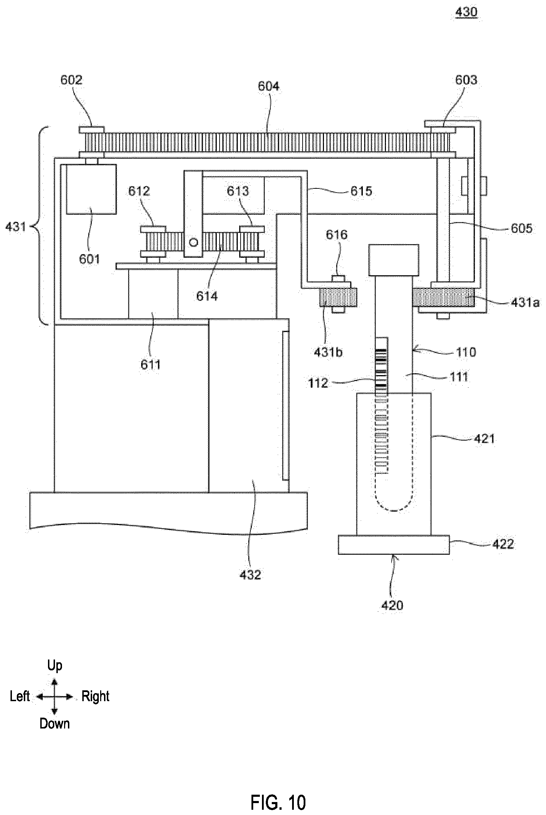

FIG. 10 is a side view schematically showing a detailed configuration of the reading unit 430.

As described above, the reading unit 430 includes a rotation mechanism 431 and a barcode reader 432. The rotation mechanism 431 includes a main roller 431a, a pair of driven rollers 431b, a motor 601, pulleys 602 and 603, a belt 604, a shaft 605, a motor 611, pulleys 612 and 613, a belt 614, a substrate 615, and a shaft 616.

The motor 601 is configured by a stepping motor. The pulley 602 is installed on a shaft extending in the vertical direction of the motor 601. The pulley 603 is installed to the right of the pulley 602. The belt 604 is connected to the pulleys 602 and 603. The shaft 605 extends in the vertical direction and is connected to the pulley 603. A main drive roller 431a is fixed to the lower end of the shaft 605. When the motor 601 is driven, the belt 604 moves left and right, and the pulley 603, the shaft 605, and the driving roller 431a rotate about the vertical direction as a rotation axis.

The motor 611 is configured by a stepping motor. The pulley 612 is installed on a shaft extending in the vertical direction of the motor 611. The pulley 613 is installed to the right of the pulley 612. The belt 614 is connected to the pulleys 612 and 613. The substrate 615 is fixed to the belt 614. The shaft 616 is installed at the lower end of the substrate 615 so that it can rotate about the vertical direction as a rotation axis. The driven roller 431b is installed on the shaft 616. When the motor 611 is driven, the belt 614 moves left and right, and the driven roller 431b moves left and right.

When the container 110 held by the holding unit 421 is positioned at the reading position 433 (see FIG. 6), the motor 611 is driven and the pair of driven rollers 431b are moved to the right toward the container 110. In this way the body 111 of the container 110 is interposed between the main roller 431a and the pair of driven rollers 431b. When the motor 601 is driven in this state, the driving roller 431a rotates. In this way the container 110 rotates in the circumferential direction while being held by the holding unit 421. Then, the barcode reader 432 reads the barcode label 112 of the container 110.

When the container 110 rotates in the circumferential direction in this way, the barcode label 112 is positioned in front of the barcode reader 432, so that the barcode label 112 can be reliably read by the barcode reader 432.

FIG. 11 is a block diagram showing the configuration of the supply device 40.

The supply device 40 includes a control unit 201, a storage unit 202, a take-out unit 41, a cold storage unit 43, a heating unit 44, a transfer unit 210, a barcode unit 220, a barcode reader 230, and a communication unit 203.

The take-out unit 41 includes a stepping motor or the like of a mechanism for transferring the rack 100 in the take-out unit 41. The communication unit 203 is connected to the line concentrator 70 by, for example, Ethernet.

The control unit 201 is configured by, for example, a CPU. The control unit 201 controls each unit of the hardware by executing the computer program stored in the storage unit 202. A schedule for automatically executing the quality control measurement is registered in the storage unit 202. The schedule can be registered by specifying the time for each day of the week, or by specifying a specific date and time. The schedule further includes specifying the type of quality-control sample to be measured by the measuring device 10.

The control unit 201 controls each unit to supply the quality control sample to the measuring device 10 so that the quality control measurement is automatically started at the designated date and time according to the schedule registered in the storage unit 202. Specifically, the control unit 201 controls the transfer unit 210 at a predetermined time (for example, 30 minutes before) of the designated date and time registered as the schedule, and the container T1 of the specified type of quality control sample is taken out by the transfer unit 210 from among the containers T1 stored in the cold storage unit 43. Under the control of the control unit 201, the transfer unit 210 sets the removed container T1 in the heating unit 44, raises the temperature for a predetermined time, and then sets the heated T1 container in the rack 100. The take-out unit 41 conveys the rack 100 toward the measuring device 10 under the control of the control unit 201. The rack 100 is conveyed to the measuring device 10 by the transfer device 20 under the control of the transfer control device 60, and the quality control sample set in the rack 100 is measured. In this way the automatic measurement of the quality control sample is executed.

FIG. 12 is a block diagram showing the configuration of the measuring device 10. The measuring device 10 includes a stirring mechanism 410, a front-rear transfer unit 420, a reading unit 430, a liquid transfer unit 401, a sample preparation unit 402, a measuring unit 403, and a communication unit 404.

The liquid transfer unit 401 includes a pump, a valve, and the like for applying pressure to the flow path to transfer the liquid in the flow path in the measuring device 10. The liquid transfer unit 401 sucks the sample through the piercer 441 inserted in the container 110, and transfers the suctioned sample to the sample preparation unit 402. The sample preparation unit 402 includes a chamber for mixing the sample and a reagent. The liquid transfer unit 401 sends the measurement sample obtained by mixing the sample and the reagent in the sample preparation unit 402 to the measurement unit 403.

The measuring unit 403 includes an electric resistance type detection unit, a hemoglobin detection unit, and an optical detection unit. The electric resistance type detection unit measures blood cells by the sheath flow DC detection method. The hemoglobin detection unit measures hemoglobin by the SLS-hemoglobin method. The optical detector measures blood cells by a flow cytometry method. The measurement unit 403 measures the measurement sample and acquires the measurement data.

The communication unit 404 is configured by, for example, a USB interface and is connected to the corresponding control device 30. The measurement data obtained by the measurement unit 403 is transmitted to the control device 30 via the communication unit 404. As described above, the sample in the container 110 is stirred by the stirring mechanism 410 before being suctioned by the measuring device 10. As described above, the container 110 (container T1) for accommodating the quality control sample is stored in a cold state in the storage 42 of the supply device 40, so that the blood cell components aggregate and precipitate in the container T1. In particular, in a quality control sample containing pseudo-platelets as disclosed in US Pat. No. 6,221,668, the pseudo-platelets are more likely to aggregate and less likely to loosen than natural platelets. When the quality control sample is agitated in the same manner as the subject sample, the agitation of the quality control sample becomes insufficient, and when the quality control sample is suctioned from the container T1 and the measurement is performed, the measurement result of the quality control sample is obtained with a risk that it will not be obtained properly.

As an example in which the accuracy of the measurement result is lowered due to poor stirring, for example, in the quality control sample containing pseudo-platelets as described above, the pseudo-platelets are measured while aggregated, so that the pseudo-platelets are more than normal platelets and may be detected as other large cells, such as red blood cells, resulting in low platelet levels. In another example in which the accuracy of the measurement result is lowered due to poor stirring, the measurement result of the quality control sample may differ from the displayed value due to due to suctioning and measuring the quality control sample in a state in which the concentration of the quality control sample in the container T1 is not uniform.

The measuring device 10 lowers the tip of the piercer 441 to the vicinity of the bottom of the container T1 and then suctions the quality control sample. When the concentration in the container T1 is non-uniform, the concentration of the blood cell component is high on the bottom side of the container T1 and the concentration of the blood cell component is low on the liquid surface side. Therefore, if the tip of the piercer 441 is positioned near the bottom and suctions, the concentration of the blood cell component becomes higher than the displayed value, and a correct measurement result cannot be obtained.

Hence, in the first embodiment, the quality control sample is agitated in a first operation mode different from the second operation mode for agitating the subject sample. As the first operation mode for stirring the quality control sample, conditions can be set so that the quality control sample, which is less likely to be mixed than the subject sample, can be sufficiently mixed. More specifically, in the first embodiment, the first operation mode has enhanced agitation as compared with the second operation mode. For example, when two quality control samples of the same lot are prepared and stirred in the first operation mode and the second operation mode, the concentration of the components in the container after stirring becomes more uniform when the mixture is stirred in the first operation mode than when the mixture is stirred in the second operation mode. In this way the quality control sample can be sufficiently agitated, and the measurement result of the quality control sample can be normally obtained. The first operation mode and the second operation mode will be described later with reference to FIG. 15.

Hereinafter, a series of steps for measuring the quality control sample by stirring it in a first operation mode different from the second operation mode for stirring the subject sample will be described.

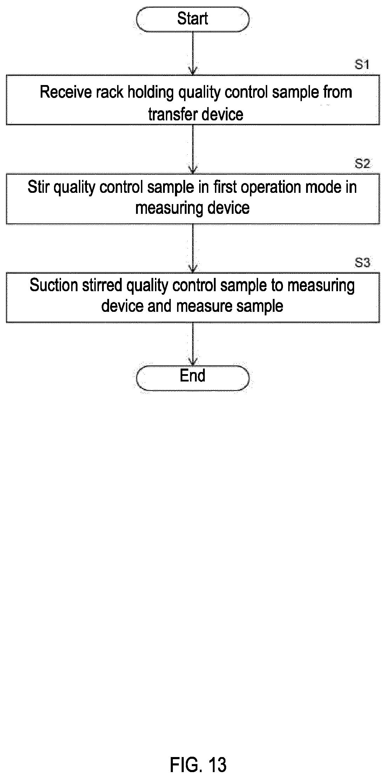

FIG. 13 is a flowchart illustrating the flow of the quality control sample measurement by the sample analyzer 1a of the first embodiment.

In step S1, the transport device 20 receives the rack 100 holding the container T1 of the quality control sample. Specifically, when the rack 100 in which the quality control sample container T1 is set by the supply device 40 is sent to the transfer device 20 via the first transfer path 301, the transfer device 20 transfers the rack 100 to the first rack in storage 311. In step S2, the measuring device 10 stirs the container T1 containing the quality control sample in the first operation mode. Specifically, the rack 100 received in the first rack storage unit 311 is conveyed by the transfer device 20, and the container T1 containing the quality control sample is positioned at the take-out position 323. The measuring device 10 drives the stirring mechanism 410 to take out the container T1 at the take-out position 323 from the rack 100. The measuring device 10 drives the stirring mechanism 410 to stir the taken-out container T1 in the first operation mode.

In step S3, the measuring device 10 suctions and measures the quality control sample stirred in the first operation mode by the piercer 441. Specifically, the measuring device 10 drives the liquid transfer unit 401 to mix the suctioned quality control sample and a predetermined reagent to prepare a measurement sample. The measuring device 10 drives the measuring unit 403 to measure the prepared measurement sample. Then, the control device 30 analyzes the measurement data.

### Stirring Parameters

The first operation mode for stirring the container T1 containing the quality control sample has set parameters such that the stirring is strengthened as compared with the second operation mode for stirring the container T2 containing the subject sample. The stirring parameters include five elements: (1) number of stirrings, (2) invert speed, (3) invert angle, (4) presence/absence of repeated impact application, and (5) presence/absence of posture change.

### (1) Number of times of stirring

The number of times of stirring refers to the number of times that the container 110 is inverted and stirred by the stirring mechanism 410. The inverting operation until the invert angle rises from θ1 to θ2 and returns to θ1 again corresponds to one stirring. When the container 110 rotates to the inverted state of θ2, the sample in the container 110 moves from the bottom to the lid 113 side. Generally, when a blood sample is allowed to stand, blood cell components (erythrocytes, white blood cells, platelets) settle and separate into blood cell components and liquid components (plasma) in the vertical direction. By inverting and stirring, the precipitated blood cell components are mixed with plasma, and the concentration of the blood cell components in the sample is made uniform. In the first operation mode, the number of times of stirring can be increased as compared with the second operation mode. When the number of times of stirring is large, the liquid component moves so as to repeatedly push away the blood cell component that has settled on the bottom, so that the blood cell component is easily peeled off from the bottom, and the mixing of the liquid component and the blood cell component is promoted. Since an external force is repeatedly applied to the blood cell component mixed with the liquid component, the aggregated blood cell components are released and the mixing is promoted. Therefore, in the first operation mode, even the quality control sample can be appropriately mixed by increasing the number of times of stirring. Preferably, the number of times of stirring in the second operation mode for stirring the subject sample is 10 times or less (preferably 6 to 10 times), whereas the number of times of stirring in the first operation mode is at least double, preferably three times or more, and more preferably five times or more the number of times of stirring in the second operation mode.

### (2) Invert speed

The inverting speed refers to the speed of rotational movement when the container 110 is rotated by the stirring mechanism 410. The speed may be the maximum speed between θ1 and θ2, or may be the average speed. The inverting speed is controlled by the rotational speed of the shaft 521a of the motor 521. The inverting speed differs depending on whether the container 110 is rotated when the container 110 is raised, that is, in the direction in which the invert angle is large, or when the container 110 is lowered, that is, when the container 110 is rotated in the direction in which the invert angle is small. In the first operation mode, the inverting speed can be made higher than that in the second operation mode. When the inverting speed is high, the moving speed of the liquid component in the container 110 becomes high, and the blood cell component that has settled on the bottom of the liquid component is easily flushed loose. In addition, the swaying of the liquid surface of the liquid component makes it easier for the aggregated blood cell component to declot. Preferably, the inverting speed in the first operation mode is at least 1.2 times, and preferably at least 1.4 times, the inverting speed in the second operation mode for stirring the subject sample.

### (3) Invert angle

The invert angle means the highest angle θ1 and the lowest angle θ2 when the container 110 is rotated by the stirring mechanism 410. In the first operation mode, the swing width can be increased by lowering θ2 as compared with the second operation mode. When the swing width is large, the amount of movement of the liquid component in the container is large, and miscibility is promoted. Preferably, the invert angle in the first operating mode is at least 1.2 times, and more preferably 1.4 times, the invert angle in the second operating mode. In the example described later, the invert angle in the second operation mode is 97.2° (θ1=47.8°, θ2=145°), whereas the invert angle in the first operation mode is 140° (θ1= 0°, θ2=145°).

### (4) Repetition of impact

Applying an impact refers to applying an impact to the container 110 by lowering the container 110 to a vertical state so that the magnet 519 and the metal member 520 are brought into contact with each other. The impact applied to the container 110 facilitates the dispersion of the blood cell components sedimented at the bottom. When the aggregated blood cell components are subjected to impact, they become easier to de-aggregate. Preferably, the container 110 is repeatedly impacted in the first mode of operation and not repeatedly impacted in the second mode of operation.

Specifically, in the second operation mode, when returning the container 110 to the vertical state in the last cycle of the eight times of inversion stirring, the magnet 519 and the metal member 520 are brought into contact to give an impact to the container 110. In this way the blood adhering to the inside of the lid 113 can be dislodged, and the blood can be prevented from splashing out when the piercer 441 punctures the lid 113. On the other hand, in the first operation mode, the magnet 519 and the metal member 520 are repeatedly brought into contact with each other by returning the container 110 to the vertical state in all the cycles of the inversion stirring 50 times. In this way the blood cell components that have settled on the bottom flushed off, and the aggregated blood cell component is loosened. Note that the number of times the impact is applied in the first operation mode is not limited, and the impact may be applied at least a plurality of times. It is not essential to apply an impact in the second operation mode.

### (5) Posture change

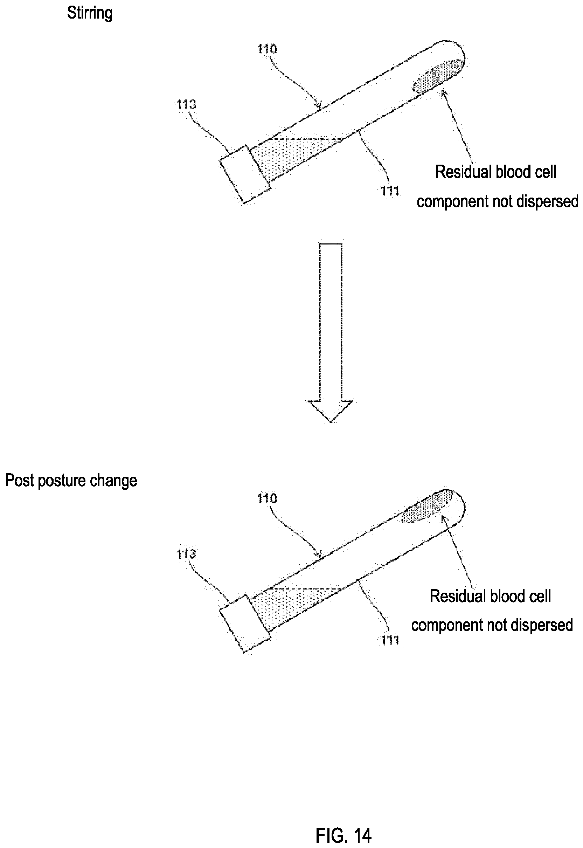

The posture change means rotating the container 110 in the circumferential direction during the stirring process. The first operation mode includes rotating the container 110 in the circumferential direction during stirring, and the second operation mode does not include rotating the container 110 in the circumferential direction during stirring. In the inversion stirring method as shown in FIG. 9, as schematically shown in FIG. 14, the blood cell components of the portion that comes to the lower side of the bottom of the container 110 remain without being stirred when it is lifted up. Therefore, by rotating the container 110 in the circumferential direction by 180° during the stirring process, as shown in FIG. 14, the blood cell components that were positioned at the lower side of the bottom of the container 110 before the posture change can be repositioned to the upper side of the bottom of the container 110. By performing inversion stirring again after changing the posture, it is possible to prevent the components of the quality control sample from aggregating and remaining precipitated at an offset position around the axis in the container 110. Note that the angle of rotation need not be 180°, and may be arbitrarily determined within the range of, for example, 90° to 270°.

FIG. 15 is a table showing a first setting example of stirring parameters for the first and second operation modes. Stirring parameters for the first operation mode (quality control sample) and the second operation mode (subject sample) are as follows.
(1) Number of times of stirring
   - First operation mode (quality control sample): 50 times
   - Second operation mode (subject specimen): 8 times
(2) Invert speed
   - First operation mode (quality control sample): 105 rpm when ascending and descending
   - Second mode of operation (subject specimen): 73.5 rpm when ascending and descending.
(3) Invert angle
   - First operation mode (quality control sample): θ1 = 0°, θ2 = 145°
   - Second operation mode (subject specimen): θ1 = 47.8°, θ2 = 145°
(4) Repetition of impact
   - First operation mode (Quality control sample): Yes
   - Second operation mode (subject specimen): none
(5) Posture change
   - First operation mode (Quality control sample): Yes
   - Second operation mode (subject specimen): none

In the example of FIG. 15, parameters are set such that the stirring force is stronger in the first operation mode than in the second operation mode regarding 1) number of times of stirring, (2) invert speed, (3) invert angle, (4) presence or absence of impact, (5) presence or absence of posture change. By setting the operation mode in this manner, it is possible to appropriately mix even a quality control sample that is more difficult to mix than a subject sample. Note that, here, although parameters in all items (1) to (5) are set that make the stirring force stronger in the first operation mode than in the second operation mode, just one or more of the items (1) to (5) may be enhanced in the first mode of operation. For example, the invert speed and invert angle may be the same between the first operation mode and the second operation mode. In this case, the stirring power may be supplemented by enhancing other parameters. For example, the number of times of stirring may be increased from 50 times.

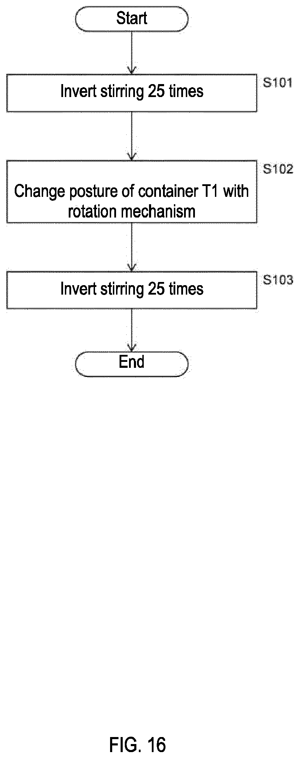

FIG. 16 is a flow chart showing the stirring process in the first operation mode of step S2 of FIG. 13. Here, a case will be described in which the quality control sample is stirred with the stirring parameter in FIG. 15 is set as the first operation mode.

In step S101, the control unit 31 controls the stirring mechanism 410 so that the container T1 is inverted and stirred 25 times. First, the controller 31 controls the motor 521 of the rotating mechanism 413 so that the container T1 in the vertical state rotates up to 145° at a speed of 105 rpm. Since the bottom of the container T1 is positioned higher than the lid 113 (head), the liquid component flows from the bottom toward the lid 113 side. Next, the controller 31 controls the motor 521 of the rotating mechanism 413 so that the container T1 reversely rotates to 0° at a speed of 105 rpm. When the bottom of the container T1 comes to a position lower than the lid 113 again, the liquid component that has flowed to the lid 113 side flows again to the bottom side. This inverting motion completes one stirring operation. The control unit 31 repeats this invert stirring control 25 times.

Subsequently, in step S102, the controller 31 controls the rotation mechanism 431 (see FIGS. 6 and 10) so that the posture of the container T1 is changed.

Specifically, referring to FIG. 6, the control unit 31 controls forward/backward transfer unit 420 so that holding unit 421 is positioned at the removal position 323. Subsequently, referring to FIG. 7, the control unit 31 controls the motor 501 of the stirring mechanism 410 so that the container T1 gripped by the gripping unit 514 is lowered and the container T1 is set on the holding unit 421. The control unit 31 controls the cylinder 516 so that the two grips 514 are separated. In this way the holding of the container T1 is released. The control unit 31 controls the motor 501 so that the gripping unit 514 is retracted upward.

The control unit 31 controls the forward/backward transfer unit 420 so that the holding unit 421 holding the container T1 is positioned at the reading position 433. The control unit 31 controls the motor 611 of the rotation mechanism 431 so that the driven roller 431b moves toward the container T1 and the body 111 of the container T1 is sandwiched between the driving roller 431a and the driven roller 431b. In this state, the control unit 31 controls the motor 601 so that the drive roller 431a rotates and the container T1 rotates in the circumferential direction, that is, around the longitudinal axis of the container T1. The rotation angle in the circumferential direction is, for example, 180°. When the rotation is completed, the control unit 31 controls the motor 611 so that the driven roller 431b is separated from the container T1.

In step S103, the control unit 31 controls the remaining 25 times of inversion stirring of the container T1. Specifically, the control unit 31 controls the forward/backward transfer unit 420 so that the holding unit 421 holding the container T1 is positioned at the removal position 323. At this time, the container T1 held by the holding unit 421 is rotated 180° from the orientation when it was set on the holding unit 421 in step S102. The control unit 31 controls the stirring mechanism 410 so that the container T1 held by the holding unit 421 is grasped and lifted upward, and the container T1 is inverted and stirred 25 times. By being rotated 180° in step S102, the container T1 is agitated in a state rotated 180° from the state in step S101. The action of gripping the container T1 by the stirring mechanism 410 and the action of inverting and stirring are as described above. After the stirring is completed, the control unit 31 returns the processing to the main routine of FIG. 13.

### Modification 1 of the First Embodiment

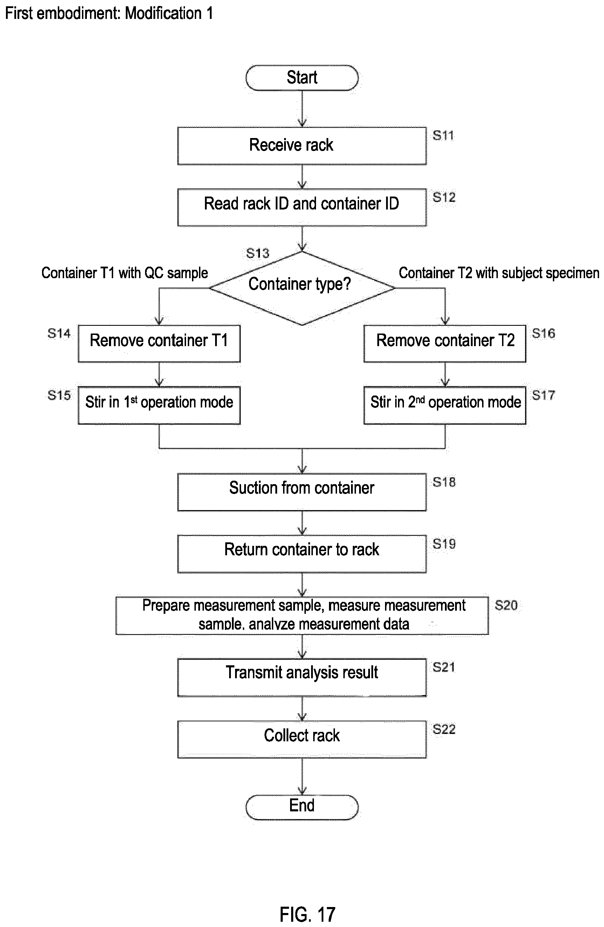

FIG. 17 is a flowchart illustrating processing in modification 1 of the first embodiment 1. In the example of FIG. 17, unlike the example of FIG. 13, the type of the container 110 held in the rack 100 is determined based on the sample ID, and the stirring operation mode is switched according to the type. Specifically, the container T1 is stirred in the first operation mode when it is determined that the container 110 is the container T1 containing the quality control sample based on the sample ID, and the container T2 is stirred in the second operation mode when it is determined that the container 110 is the container T2 containing the subject sample. The flowchart of FIG. 17 is implemented by the control unit 31 of the control device 30 executing a computer program stored in the storage unit 32 to control the measuring device 10 and the second transport mechanism 20b.

When the rack 100 is sent to the transport device 20 via the first transport path 301, the control unit 31 controls the transport device 20 so that the rack 100 is received in the first rack storage unit 311 in step S11. In step S12, the control unit 31 controls the transport device 20 so that the rack 100 is transported on the first rack storage unit 311 and the second transport path 321, and controls the reading unit 322 so that the barcode label 102 of the rack 100 and the barcode label 112 of the container 110 held by this rack 100 are read in order. In this way the control unit 31 obtains the rack ID from the barcode label 102 and the sample ID from the barcode label 112.

Then, the control unit sequentially performs steps S13 to S21 for all the containers 110 held by the rack 100.

At step S13, the control unit 31 determines the type of the container 110 based on the sample ID acquired at step S12. That is, based on the sample ID, the control unit 31 determines whether the target container 110 is the container T1 containing the quality control sample or the container T2 containing the subject sample. Note that the control unit 31 is not limited to determining the type of the container 110 based only on the sample ID inasmuch as the type of container 110 also may be determined as T1 or T2 when the type of rack 100 based on the rack ID and the type of container 110 based on the sample ID match.

When the target container 110 is the container 110 (container T1) containing the quality control sample, in step S14, the control unit 31 controls the stirring mechanism 410 so that the target container T1 is taken from the rack 100 at the take-out position 323. Then, in step S15, the control unit 31 controls the stirring mechanism 410 so that the removed container T1 is stirred in the first operation mode.

On the other hand, when the target container 110 is the container 110 (container T2) containing the subject specimen, in step S16, the control unit 31 controls the stirring mechanism 410 so that the target container T2 is taken from the rack 100 at the take-out position 323. Then, in step S17, the control unit 31 controls the stirring mechanism 410 so that the removed container T2 is stirred in the second operation mode.

After the stirring performed by the stirring mechanism 410 is completed in steps S15 and S17, the control unit 31 controls the forward/backward transfer unit 420 so that the stirred container 110 is transferred to directly below the piercer 441. Then, in step S18, the control unit 31 controls the piercer drive unit 442 and the liquid transfer unit 401 so that the sample in the container 110 is suctioned.

In step S19, the control unit 31 controls the forward/backward transfer unit 420 and the stirring mechanism 410 so that the container 110 that has been suctioned in step S18 is returned to the original holding unit 101 of the original rack 100.

Then, in step S20, the control unit 31 controls the liquid transfer unit 401 so that the sample suctioned in step S18 is mixed with a predetermined reagent to prepare a measurement sample. In step S20, the control unit 31 controls the measurement unit 403 so that the prepared measurement sample is measured, and analyzes the measurement data obtained by the measurement. Then, in step S21, the control unit 31 transmits the result of the analysis performed in step S20 to the host computer 2. The host computer 2 transmits the analysis result to the display terminal in response to a request from the display terminal. The display terminal displays the analysis results of the quality control samples on a list screen, and displays the analysis results of the subject samples on a list screen.

In step S22, when the processes of steps S13 to S19 are completed for all the containers 110 held in the rack 100, the control unit 31 transports this rack 100 to the left end of the second transport path 321, and the transport device 20 is controlled so that the rack is sent to the second rack storage unit 331. Thus, the processing of the control unit 31 for one rack 100 ends.

Note that when the above processing is completed for the right measuring device 10 of the two adjacent measuring devices 10 on the second transport path 321, the control unit 31 determines whether it is necessary to perform measurement with the left measuring device 10. When the control unit 31 determines that the measurement device 10 on the left side also needs to perform measurement, the measurement device 10 on the left side performs the processing of steps S13 to S19.

In this way the rack 100 sent to the second rack storage unit 331 is conveyed to the transport device 20 adjacent to the left when further measurement by the measurement device 10 is required. When measurement by the measuring device 10 is unnecessary, the rack is moved to the right to the transport device 20 or the supply device 40 adjacent to the right, and when the rack 100 holds subject samples, the rack is moved to the left to the collection device 50.

### Modification 2 of the First Embodiment

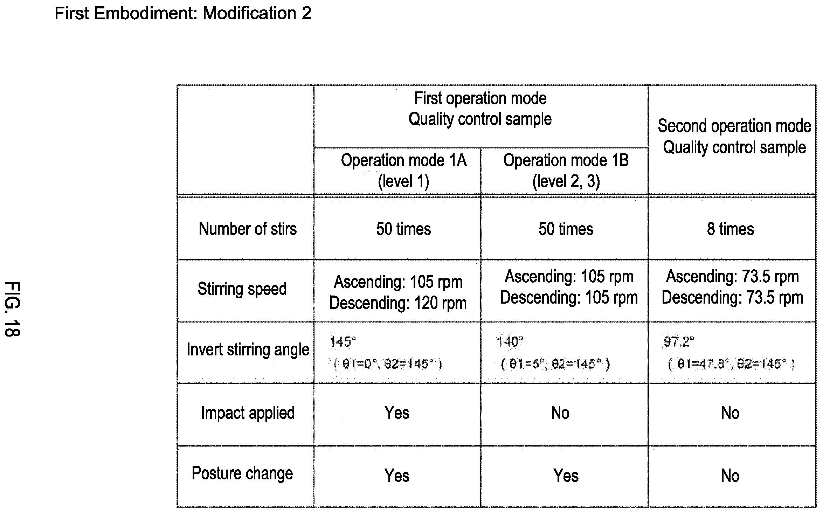

FIG. 18 is a table showing a second setting example of stirring parameters according to Modification 2. In the second setting example, unlike the first setting example shown in the first embodiment, different stirring parameters are set according to the type of quality control sample. Specifically, in the second setting example, the first operation mode includes a first operation mode 1A applied to level 1 quality control samples, and a first operation mode 1B applied to level 2 and level 3 quality control samples. The first operating mode 1A and the first operating mode 1B include the following parameters.
(1) Number of times of stirring
   - Operation mode 1A, operation mode 1B: 50 times
(2) Invert speed
   - Operation mode 1A: 105 rpm when ascending, 120 rpm when descending
   - Operation mode 1B: 105 rpm when ascending and descending
(3) Invert angle
   - Operation mode 1A: θ1 = 0°, θ2 = 145°
   - Operation mode 1B: θ1=5°, θ2=145°
(4) Repetition of impact
   - Operation mode 1A: Yes
   - Operation mode 1B: None
(5) Posture change
   - Operation mode 1A, 1B: Available

As described above, since there are three types of quality control samples according to their concentration levels and the ease with which the quality control samples are mixed by stirring differs depending on the concentration level, it is preferable to set optimum stirring parameters according to the type of quality control sample. As a result of examination by the inventors, it was found that the quality control sample of level 1, which has the lowest concentration level, is the least likely to be mixed. Therefore, in the second setting example, for level 1 quality control samples, the invert speed when dropping was increased from 105 rpm to 120 rpm, and the stirring force was increased by applying a more rapid force. In the second setting example, the level 1 quality control sample is subjected to impact as in FIG. 15, while the level 2 and level 3 quality control samples do not receive impact. Applying impact is effective in strengthening the stirring of level 1 quality control samples that are particularly prone to platelet aggregation, but there is a problem that metal fatigue may accrete due to repeated collisions between the magnet 519 and the metal member 520. Therefore, by applying impact only to level 1 quality control samples, which are particularly difficult to mix, it is possible to avoid mechanical fatigue and appropriately mix multiple types of quality control samples with different concentration levels.

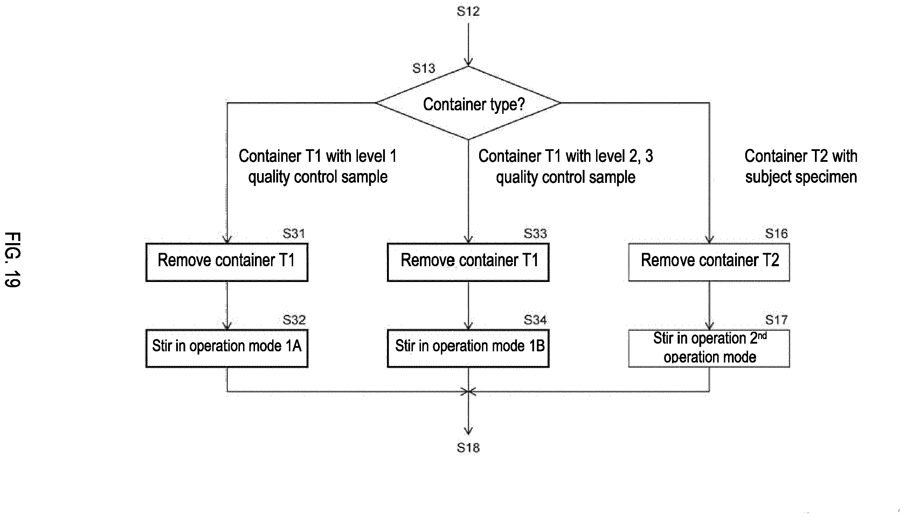

FIG. 19 is a flowchart showing sample analysis processing by the control device 30 according to Modification 2. In FIG. 19, steps S31 and S32 are added between steps S13 and S18, as compared to FIG. 17, and steps S33 and S34 are added to show the processing when the type of the container 110 is the container T1 containing level 2 and 3 quality control samples. Steps S31 to S34 will be described below.

When the control unit 31 determines in step S13 that the target container 110 is the container T1 that stores the level 1 quality control sample, in step S31, the control unit 31 controls the stirring mechanism 410 so that the target container T1 is taken from the rack 100. Then, in step S32, the control unit 31 controls the stirring mechanism 410 so that the removed container T1 is stirred in the operation mode 1A shown in FIG. 18. At this time, the control unit 31 controls the forward/backward transfer unit 420 and the rotation mechanism 431 so that the posture of the container is changed during stirring.

When the control unit 31 determines in step S13 that the target container 110 is the container T1 that stores the level 2 or 3 quality control sample, in step S33, the control unit 31 controls the stirring mechanism 410 so that the target container T1 is taken from the rack 100. Then, in step S34, the control unit 31 controls the stirring mechanism 410 so that the removed container T1 is stirred in the operation mode 1B shown in FIG. 18. Also in this case, the control unit 31 controls the forward/backward transfer unit 420 and the rotation mechanism 431 so that the posture of the container is changed during stirring.

### Modification 3 of the First Embodiment

In the first embodiment described above, the containers T1 taken from the storage 42 of the supply device 40 may be sequentially supplied to a plurality of measuring devices 10, and the quality control samples may be measured by each measuring device 10. In this case, according to the first embodiment, the quality control sample is always stirred in the first operation mode. However, the present invention is not limited to this configuration inasmuch as, after the quality control sample is taken out from the storage box 42, the measuring device 10 to which the container is transported first stirs in the first operation mode, and the measuring device 10 to which the container is transported thereafter stirs in the second operation mode.

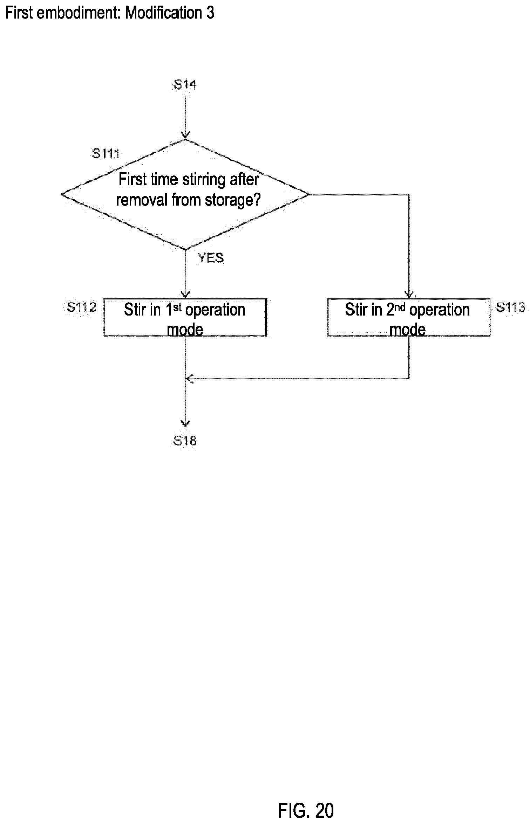

FIG. 20 is a flowchart showing the sample analysis process by the control device 30 according to Modification 3 of Embodiment 1. In FIG. 20, steps S111 to S113 are added in place of step S15 as compared with FIG. 17. This portion will be described below.

In step S111, the control unit 31 determines whether the current stirring of the target container T1 is the first stirring after the object container T1 is taken from the storage 42. Specifically, based on the target sample ID read in step S12 (see FIG. 17), the control unit 31 causes the transport control device 60 to take the target container T1 from the storage 42, and then an inquiry is made as to the number of times the container T1 has been stirred (hereinafter referred to as "stir count value"). Inquiries to the transport control device 60 are made via the first transport mechanism 20a and the line concentrator 70.

The transport control device 60 holds position information indicating which transport route the container T1 in the sample analysis system 1 is on, and the number of times the container T1 has been stirred by the measuring device 10 after being taken from the storage 42. When step S15 (see FIG. 17) is executed with one measuring device 10 for the container T1, the transport control device 60 increments the stir count value for this container T1 by one. When the container T1 is returned to the storage 42, the transport control device 60 sets the stir count value of the container T1 to zero.

In step S111, when the stir count value of the target container T1 is 0, the control unit 31 determines that the current stirring is the first stirring after being taken from the storage 42. In step S111, when the stirring count value of the target container T1 is 1 or more, the control unit 31 determines that the current stirring is not the first stirring after being taken from the storage 42.

If the current stirring is the first stirring, in step S112, the controller 31 controls the stirring mechanism 410 so that the container T1 is stirred in the first operation mode, as in step S15 of FIG. 17. On the other hand, if the current stirring is not the first stirring, in step S113, the controller 31 controls the stirring mechanism 410 so that the container T1 is stirred in the second operation mode.

Note that stirring in the second operation mode in step S113 is an example, and the present invention is not limited to this configuration. The stirring in step S113 need not be the same as the stirring parameter in the second operation mode, and may be weaker than the stirring parameter in the first operation mode.

According to Modification 3 of Embodiment 1, when the measurement apparatus 10 again stirs the quality control sample that has been stirred in the first operation mode before measurement, the stirring is weaker than the stirring in the first operation mode (for example, the stirring in in the second operation mode) stirs the quality control sample. According to this configuration, continuous stirring in the first operation mode can avoid excessive damage to the quality control sample. In addition, it is possible to sufficiently agitate quality control samples while improving processing efficiency. For example, when weak stirring is performed in the second operation mode, the number of times of stirring, stirring speed, and stirring angle are smaller than in stirring in the first operation mode, and posture change is not performed. Therefore, since the second and subsequent stirrings are performed weaker than the stirring in the first operation mode, the time required for stirring can be shortened more than in the first operation mode, and the quality control sample can be sufficiently stirred in conjunction with the stirring based on the first operation mode performed the first time.

### Modification 4 of the First Embodiment

In Modification 3 of Embodiment 1, if the current stirring is not the first stirring for the target container T1, stirring is performed in step S113 according to fixed parameters that are weaker than those in the first operation mode. However, the invention is not limited to this configuration, inasmuch as when the current stirring is not the first stirring, the parameters may be changed according to the elapsed time from the stirring in the first operation mode.

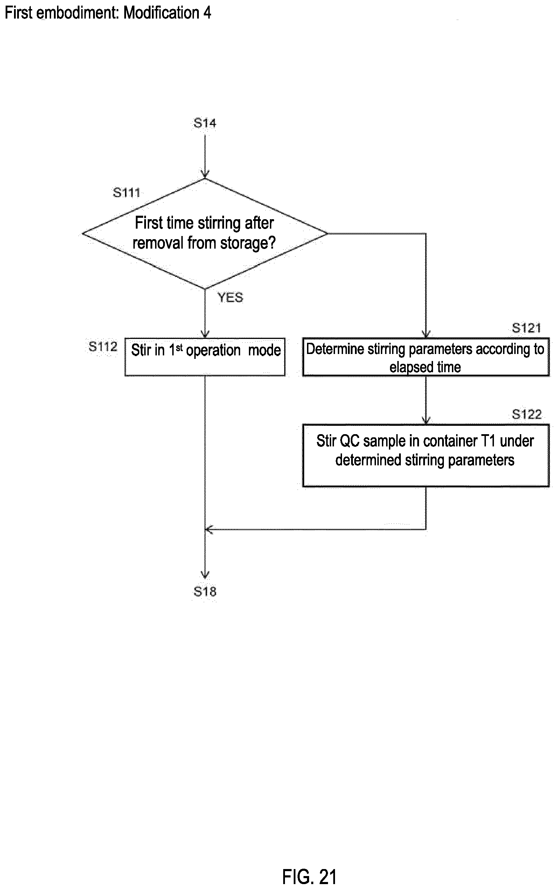

FIG. 21 is a flowchart showing the sample analysis process by the control device 30 according to Modification 4 of the first embodiment. In FIG. 21, steps S121 and S122 are added in place of step S113 as compared with FIG. 20. This portion will be described below. If the current stirring is not the first stirring, in step S121, the control unit 31 acquires the elapsed time from the stirring in the first operation mode already performed in step S112, and determines the parameters according to the acquired elapsed time.

Specifically, the control unit 31 inquires of the transport control device 60 about the elapsed time since the stirring in the first operation mode based on the target sample ID read in step S12 (see FIG. 17). The transport control device 60 stores the elapsed time from when the container T1 in the sample analysis system 1 was removed from the storage 42 and the timing at which the measurement device 10 stirred the container. The timing at which the measuring device 10 stirs is the timing at which the reading unit 322 (see FIG. 5) reads the barcode label 112 of the target container T1 immediately before the measurement by the measuring device 10. The measuring device 10 transmits the timing of reading the bar code label 112 to the transport control device 60 one by one.

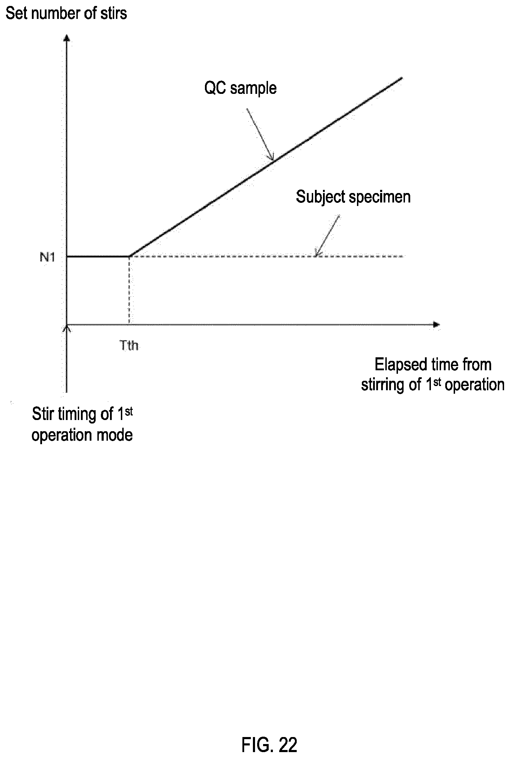

Upon receiving an inquiry about the elapsed time from the control unit 31, the transport control device 60 calculates the time of the current stirring from the timing of the stirring in the first operation mode (timing of the first stirring after being removed from the storage 42) until the timing (the timing at which the bar code label 112 was read by the reading unit 322 immediately before), and transmits the time to the control unit 31. In step S121, the control unit 31 determines a stirring parameter according to the acquired elapsed time. The stirring parameter in this case is, for example, the number of times of stirring as shown in FIG. 22 compared with the second operation mode.

FIG. 22 is a graph schematically showing the number of times of stirring determined in step S121.

The number of times of stirring is set to N1 from the time of stirring in the first operation mode until the predetermined time Tth elapses. N1 is, for example, 8 times, which is the same as the number of times of stirring in the second operation mode for the subject specimen. When the predetermined time Tth has passed since the stirring in the first operation mode, the number of times of stirring determined according to the elapsed time increases.

Returning to FIG. 21, after determining the stirring parameter in step S121, the control unit 31 controls the stirring mechanism 410 so that the quality control sample in the container T1 is stirred with the determined stirring parameter in step S122.

According to Modification 4 of the First Embodiment, when the quality control sample that has been stirred in the first operation mode is again stirred before measurement, the measuring device 10 stirs the quality control sample according to the stirring parameter. The quality control sample in the container T1 settles as time passes after the stirring is performed. Therefore, by lowering the stirring intensity when the elapsed time is short and increasing the stirring intensity when the elapsed time is long, the quality control sample can be efficiently stirred immediately before measurement, hence avoiding excessive damage.

Note that the stirring parameter determined according to the elapsed time in step S121 is a condition in which only the number of times of stirring is changed compared to the parameter of the second operation mode. At least one or more parameters of stirring speed, stirring angle, application of impact, and posture change also may be changed.

In FIG. 22, although the number of times of stirring determined according to the elapsed time gradually increased when the predetermined time Tth had passed since the stirring in the first operation mode, the number of times of stirring also may be set to a large predetermined number of times of stirring N2.

### Modification 5 of First Embodiment

Although the stirring parameter is changed according to the elapsed time from the stirring in the first operation mode in Modification 4 of the first embodiment, the present invention is not limited to this configuration inasmuch as the stirring parameters also may be changed according to the residual amount of quality control sample in the container T1.

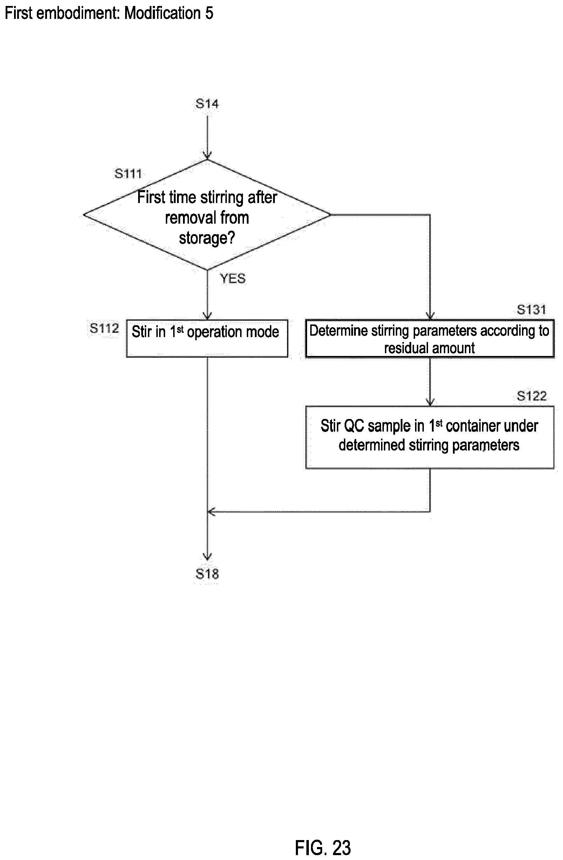

FIG. 23 is a flowchart showing a sample analysis process performed by the control device 30 according to Modification 5 of the first embodiment. In FIG. 23, step S131 is added instead of step S121 as compared with FIG. 21. This portion will be described below.

If the current stirring is not the first stirring, in step S131, the control unit 31 acquires the remaining amount of the quality control sample in the target container T1, and determines the stirring parameter according to the acquired residual amount. Specifically, the control unit 31 inquires of the transport control device 60 about the residual amount of sample in the container T1 based on the target sample ID read in step S12 (see FIG. 17). The transport control device 60 acquires in advance the residual amount of the container T1 transported from the supply device 40, and upon receiving an inquiry about the residual amount from the control unit 31, transmits the residual amount of the corresponding container T1 to the control unit 31.

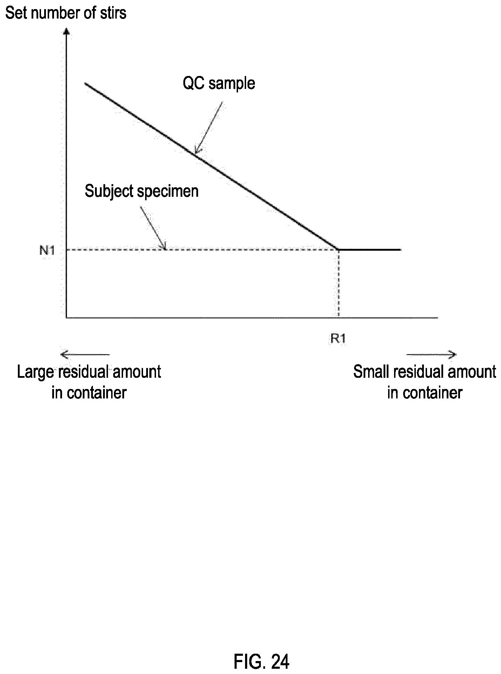

In step S131, the control unit 31 determines a stirring parameter according to the acquired residual amount. regarding the stirring parameters in this case, the number of times of stirring is changed as shown in FIG. 24, for example, as compared with the parameters for stirring in the second operation mode.

FIG. 24 is a graph schematically showing the number of times of stirring determined in step S131.

While the residual amount is equal to or greater than the threshold value R1, the determined number of times of stirring decreases as the residual amount decreases. When the residual amount becomes equal to or less than the threshold value R1, the number of times of stirring is set to a constant N1. N1 is, for example, 8 times, which is the same as the number of times of stirring in the second operation mode for the subject specimen.

According to Modification 5 of the first embodiment, when the quality control sample that has been stirred in the first operation mode and is again stirred before measurement, the measuring device 10 stirs the quality control sample with the agitation parameter according to the residual amount of quality control sample in the container T1. When the amount of the quality control sample in the container T1 decreases, the stirring progresses even with the same stirring parameter. Therefore, by lowering the stirring intensity when the residual amount is small and increasing the stirring intensity when the residual amount is large, the quality control sample can be efficiently stirred immediately before measurement, hence avoiding excessive damage.

Note that although the stirring parameter determined according to the residual amount in step S131 is different from the parameter for stirring in the second operation mode, and only the number of times of stirring is changed, the present invention is not limited to this configuration inasmuch as at least one or more parameters of speed, stirring angle, impact application, and posture change also may be changed.

The residual amount of the quality control sample in the container T1 is not limited to the volume or weight of the quality control sample actually left in the container T1, and also may be the number of remaining tests indicating how many times the measurement can be performed. In step S131, the stirring parameter also may be determined based on the usage amount or the number of tests already performed instead of the residual amount od sample. Although the number of stirrings gradually decrease in accordance with the decrease in the residual amount equal to or greater than a threshold value R1 in FIG. 24, the number of stirrings also may be set to a predetermined number of stirrings greater than N1 equal to or greater than the predetermined threshold value R1.

Although in Modification Examples 4 and 5 of the first embodiment, the number of times of stirring is changed according to the elapsed time and the residual amount, the present invention is not limited to this configuration inasmuch as the number of times of stirring also may be changed according to the temperature of the location where the measuring device 10 is installed, that is, the external temperature of the measuring device 10. When the external temperature becomes low, it is assumed that the quality control sample in the container T1 aggregates and precipitates. Therefore, when the external temperature is low, the determined number of times of stirring may be increased, and when the external temperature is high, the determined number of times of stirring may be decreased. In this way it is possible to efficiently stir the quality control sample which is performed immediately before measurement, and to avoid excessive damage to the quality control sample. At least one of the number of times of stirring, speed of stirring, angle of stirring, application of impact, and change of posture may be changed as the stirring parameters determined according to the external temperature.

### Second Embodiment

In the first embodiment, the stirring of the quality control sample based on the first operation mode is performed only in the measuring device 10 . In contrast, in the second embodiment, in addition to stirring the quality control sample in the measuring device 10, stirring of the quality control sample is also performed in the supply device 40. Other controls and other configurations of the second embodiment are the same as those of the first embodiment.

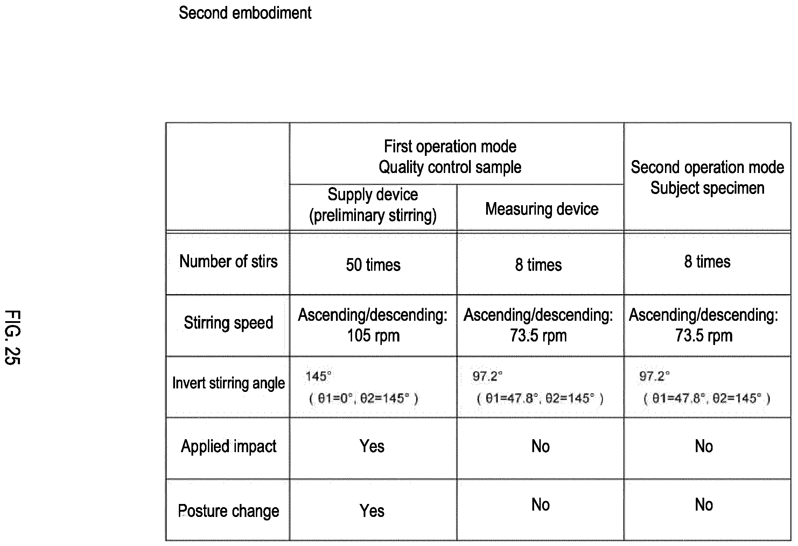

FIG. 25 is a diagram showing details of the first operation mode and the second operation mode according to the second embodiment.

The stirring that is performed first after being taken from the storage 42 of the supply device 40 is hereinafter referred to as "preliminary stirring". In the second embodiment, the preliminary stirring is performed in the supply device 40. Stirring according to the first operation mode of the second embodiment includes preliminary stirring and stirring performed immediately before measurement by the measuring device 10 after preliminary stirring. The parameters for preliminary stirring by the supply device 40 included in the first operation mode are the same as the parameters for stirring in the first operation mode of the first embodiment, and the parameters for stirring by the measuring device 10 included in the first operation mode are the same as those for stirring in the second operation mode of the first embodiment. That is, the first operation mode and the second operation mode of second embodiment differ in the presence or absence of preliminary stirring.

After the container T1 is unloaded from the supply device 40, when the quality control sample in the container T1 is measured by two or more measuring devices 10, stirring is performed in the second operation mode in any of the measuring devices 10. In this way in both the measuring device 10 that first measured the quality control sample and the measuring device 10 that subsequently measured the quality control sample, preliminary stirring and stirring immediately before measurement in the measuring device 10 were performed so that the quality control sample is sufficiently stirred.

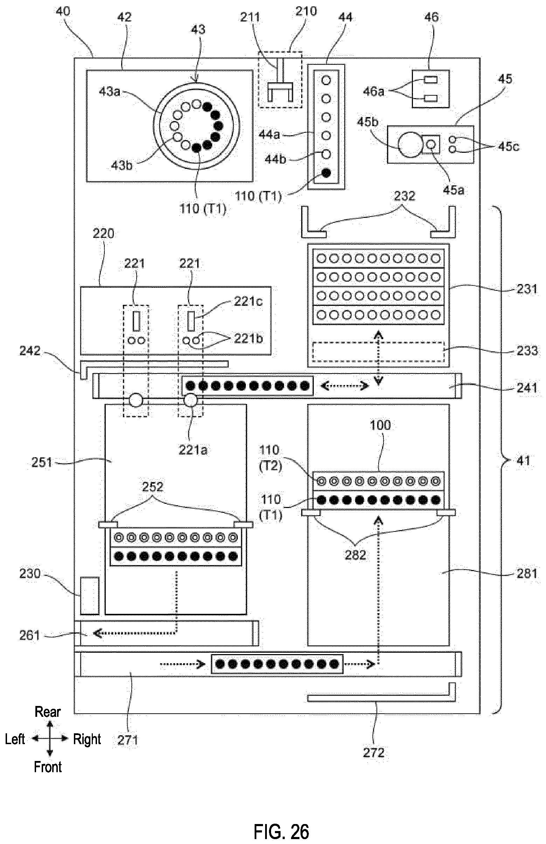

FIG. 26 is a plan view showing the detailed configuration of the supply device 40 according to the second embodiment.

The supply device 40 of the second embodiment additionally includes a rotating mechanism 45 and a stirring mechanism 46 compared to the configuration shown in FIG. 4.

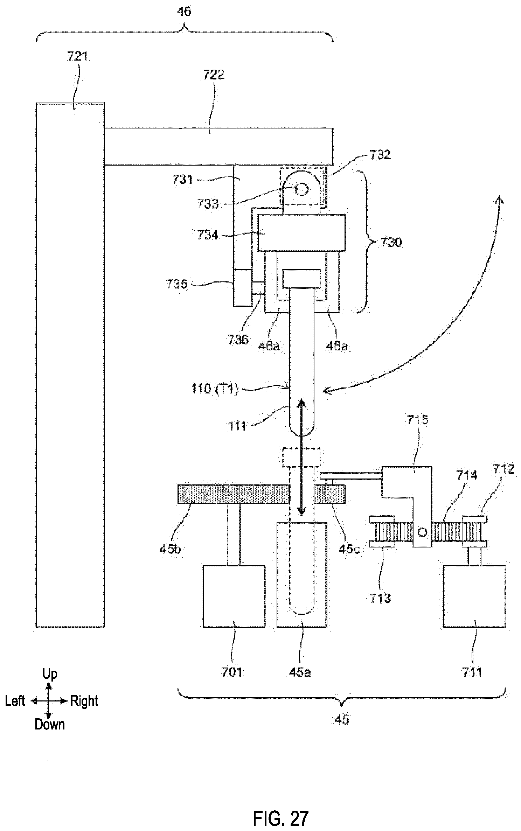

The rotating mechanism 45 rotates the container T1 in the circumferential direction during stirring by the stirring mechanism 46. The rotating mechanism 45 includes a holding unit 45a capable of holding the container T1 vertically, a driving roller 45b, and a pair of driven rollers 45c. The rotating mechanism 45 has substantially the same configuration as the rotating mechanism 431 shown in FIG. 10. The stirring mechanism 46 stirs the quality control sample in the container T1 taken from the storage 42. The stirring mechanism 46 has a pair of grips 46a. The configurations of the rotating mechanism 45 and the stirring mechanism 46 will be described later with reference to FIG. 27.

When the container T1 in the storage 42 is to be measured, the transfer unit 210 transfers the container T1 in the storage 42 to the holding unit 44b of the heating unit 44, and the heating unit 44 warms the container T1 to room temperature. Subsequently, the transfer unit 210 sets the container T1 on the holding unit 45a of the rotating mechanism 45. The stirring mechanism 46 grips and lifts the container T1 set on the holding unit 45a, and performs inversion stirring in the same manner as in FIG. 9. The stirring mechanism 46 sets the container T1 on the holding unit 45a during stirring. The rotation mechanism 45 rotates the container T1 in the circumferential direction by means of a driving roller 45b and a driven roller 45c to change the circumferential orientation of the container T1. Thereafter, the stirring mechanism 46 grips and lifts the container T1 set on the holding unit 45a, performs inversion stirring again, and sets the container T1 on the holding unit 45a. The transfer unit 210 transfers the container T1 held by the holding unit 45a to the rack 100 positioned at the front position 233.

FIG. 27 is a side view schematically showing detailed configurations of the rotating mechanism 45 and the stirring mechanism 46.

The rotation mechanism 45 includes a motor 701, a driving roller 45b, a motor 711, pulleys 712 and 713, a belt 714, a substrate 715, and a pair of driven rollers 45c.

When the motor 701 is driven, the driving roller 45b connected to the shaft of the motor 701 rotates with the vertical direction as the rotation axis. When the motor 711 is driven, the belt 714 and the substrate 715 move left and right, and the pair of driven rollers 45c move left and right. When the pair of driven rollers 45c move leftward while the container T1 is held by the holding unit 45a, the body part 111 of the container 110 is sandwiched between the driving roller 45b and the pair of driven rollers 45c. By rotating the driving roller 45b in this state, the container T1 is rotated in the circumferential direction.

The stirring mechanism 46 includes a vertical driving unit 721, a horizontal driving unit 722, and a stirring unit 730.

The vertical drive unit 721 is a mechanism for moving the horizontal drive unit 722 in the vertical direction. The left/right drive unit 722 is a mechanism for moving the stirring unit 730 in the left/right direction.

The stirring unit 730 includes a substrate 731, a motor 732, a shaft 733, a gripping mechanism 734, a magnet 735, a metal member 736, and a pair of grips 46a. The motor 732 is a stepping motor and is installed on the substrate 731. The shaft 733 extends in the front-rear direction and rotates integrally with the shaft of the motor 732. A gripping mechanism 734 is mounted on the shaft 733. The gripping mechanism 734 has the same configuration as the gripping mechanism 412 in FIGS. 7 and 8, and moves the right grip 46a in the left-right direction. In this way the distance between the pair of grips 46a changes, and the container T1 is gripped by the pair of grips 46a.

Magnet 735 and metal member 736 are of similar construction to magnet 519 and metal member 520 of FIG. 7, respectively. The magnet 735 is installed on the substrate 731, and the metal member 736 is installed on the left grip 46a. When the pair of grips 46a hold the container T1 vertically, the magnet 735 and the metal member 736 come into contact with each other.

When the motor 732 is driven, the gripping mechanism 734 rotates around the shaft 733, and the container T1 gripped by the pair of grips 46a rotates around the shaft 733. In this way the container T1 is stirred in the same manner as the stirring mechanism 410 shown in FIGS. 7 and 8. Note that a rotating mechanism 413 similar to that shown in FIGS. 7 and 8 may be provided instead of the motor 732.

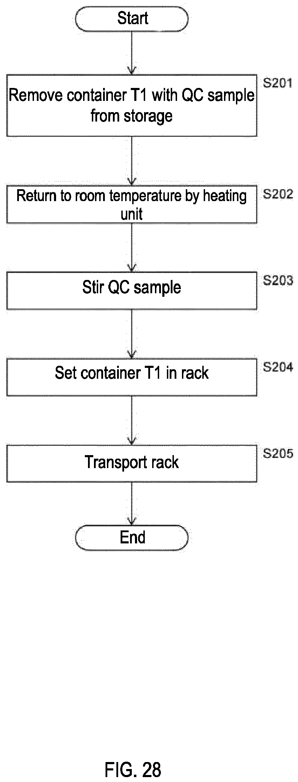

FIG. 28 is a flow chart showing the process of stirring and transporting the container T1 by the supply device 40.

In step S201 , the control unit 201 of the supply device 40 controls the transfer unit 210 so that the container T1 containing the quality control sample is taken out from the storage 42 and set in the heating unit 44. In step S202, when the installation temperature of the supply device 40 is a normal temperature, the controller 201 causes the container T1 to be held by the holder 44b of the heating unit 44 without being heated by the heating unit 44, and maintains this state for a fixed amount of time. In step S202, when the installation temperature of the supply device 40 is lower than normal temperature, the control unit 201 controls the heating unit 44 so that the container T1 is warmed to normal temperature. In this way, the temperature of the quality control sample in the container T1 is set to room temperature.

In step S203, the control unit 201 controls the transfer unit 210 to transfer the container T1 from the heating unit 44 to the rotation mechanism 45, and rotates the rotation mechanism 45 and the stirring mechanism 46 to stir the quality control sample in the container T1. The stirring in step S203 is the preliminary stirring described with reference to FIG.25.

In step S204 , the control unit 201 controls the transfer unit 210 so that the stirred container T1 is set on the holding unit 101 of the rack 100 positioned at the front position 233. Thereafter, when all the containers T1 to be set on this rack 100 have been placed, in step S205, the controller 201 causes the rack 100 at the front position 233 to move to the first transport position of the transport device 20 adjacent to the left side of the supply device 40, and the take-out unit 41 is controlled so that the material is unloaded onto the path 301. When the rack 100 is transported in the take-out unit 41, the barcode unit 220 reads the rack ID of the rack 100 and the sample ID of the container T1, and the barcode reader 230 reads the ID of the rack 100, as described in the first embodiment.

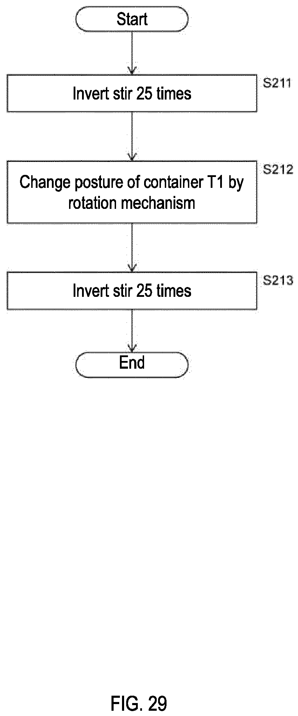

FIG. 29 is a flow chart showing the process of changing the posture of the container 110 (container T1) containing the quality control sample in the preliminary stirring performed in step S203. In the preliminary stirring, as shown in FIG. 25, inversion stirring is performed 50 times.

In step S211, the control unit 201 controls the stirring mechanism 46 so that the container T1 is inverted and stirred 25 times. Subsequently, in step S212, the control unit 201 controls the rotation mechanism 45 so that the orientation of the container T1 is changed. In this way the position of the container T1 changes in the circumferential direction. Then, in step S213, the control unit 201 controls the stirring mechanism 46 so that the container T1 is inverted and stirred the remaining 25 times.

### Modification 1 of Second Embodiment 2

In the second embodiment, the quality control sample is preliminarily stirred by inverting and stirring the container T1 in the supply device 40. However, the present invention is not limited to this configuration, and preliminary stirring of the quality control sample also may be performed by applying vortex vibration to the container T1 in the supply device 40.

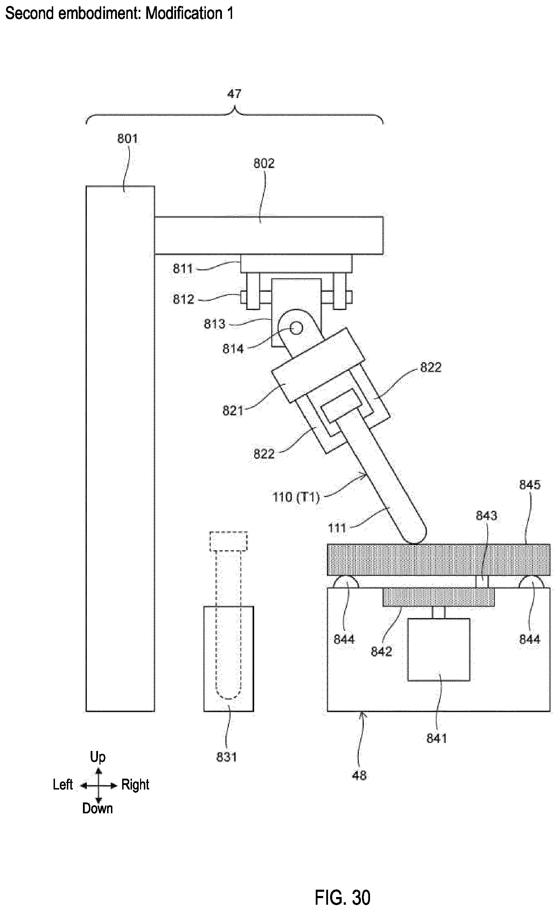

FIG. 30 is a side view schematically showing detailed configurations of the support mechanism 47 and the stirring mechanism 48 according to Modification 1 of the second embodiment.

In Modification 1 of the second embodiment, a support mechanism 47 and a stirring mechanism 48 are arranged in the supply device 40 instead of the rotating mechanism 45 and the stirring mechanism 46 shown in FIG. 26. Note that in order to transfer the container T1 between the transfer unit 210 and the support mechanism 47, a holding unit 831 that holds the container T1 in a vertical state is provided.

The support mechanism 47 includes a vertical drive unit 801, a horizontal drive section 802, a substrate 811, a shaft 812, a substrate 813, a shaft 814, a gripping mechanism 821, and a pair of grips 822.

The vertical drive unit 801 is a mechanism for moving the horizontal drive unit 802 in the vertical direction. The left/right drive unit 802 is a mechanism for moving the substrate 811 in the left/right direction. The shaft 812 extends in the horizontal direction and is held by the substrate 811 so as to be rotatable about the horizontal direction as the center of rotation. A substrate 813 is fixed to the shaft 812. The shaft 814 extends in the front-rear direction and is held by the substrate 813 so as to be rotatable around the front-rear direction. A gripping mechanism 821 is fixed to the shaft 814. The gripping mechanism 821 has the same configuration as the gripping mechanism 412 of FIGS. 7 and 8, and changes the distance between the pair of grips 822 to grip the container T1.

The stirring mechanism 48 includes a motor 841 , a gear 842, a shaft 843, multiple rollers 844, and a rubber plate 845.

Motor 841 is a stepping motor. The shaft of the motor 841 extends vertically and is connected to the center of a circular gear 842 in plan view. The lower end of the shaft 843 is connected to the upper surface of the gear 842 at a position off the center of the gear 842 in plan view. The upper end of the shaft 843 is connected to the lower surface of the rubber plate 845 at a position off the center of the circular rubber plate 845 in plan view. Thus, the shaft of the motor 841 and the shaft 843 are connected at different positions in plan view. A plurality of rollers 844 are arranged along the outer edge of the rubber plate 845 and support the lower surface of the rubber plate 845.

In Modification 1 of the second embodiment, although the specific stirring process in step S203 of FIG. 28 is different, the process of stirring and transporting the container T1 by the supply device 40 is performed in the same manner as in FIG. 28. The stirring process in step S203 will be described below.
In step S203 , the control unit 201 controls the transfer unit 210 so that the container T1 is transferred from the heating unit 44 to the holding unit 831. The control unit 201 controls the support mechanism 47 so that the lower end of the body part 111 of the container T1 is brought into contact with the upper surface of the rubber plate 845 of the stirring mechanism 48, as shown in FIG. 30, causing the container T1 held by the holding unit 831 to be gripped and lifted upward. In this state, the controller 201 drives the motor 841 of the stirring mechanism 48.

At this time, since the shaft 843 connects the gear 842 and the rubber plate 845 at a position shifted from the axis of the motor 841 in plan view, the rubber plate 845 rotates eccentrically. In this way the container T1 placed on the upper surface of the rubber plate 845 is horizontally vibrated according to the movement of the rubber plate 845, and a vortex is generated in the container T1. The vortex generated in the container T1 stirs the quality control sample in the container T1.

According to Modification 1 of the second embodiment, since the quality control sample is stirred in advance by preliminary stirring by the stirring mechanism 48 identically to the second embodiment, stirring before measurement in the measuring apparatus 10 allows the quality control sample to be sufficiently stirred. Unlike the second embodiment, the quality control sample is stirred by generating a vortex in the container T1, so the space required for stirring can be reduced compared to the second embodiment.

### Modification 2 of Second Embodiment

In Modification 1 of the second embodiment, the quality control sample is preliminarily stirred by applying vortex vibration to the container T1 in the supply device 40. However, the present invention is not limited to this configuration inasmuch as the quality control sample also may be preliminarily stirred by applying centrifugal force to the container T1 in the supply device 40.

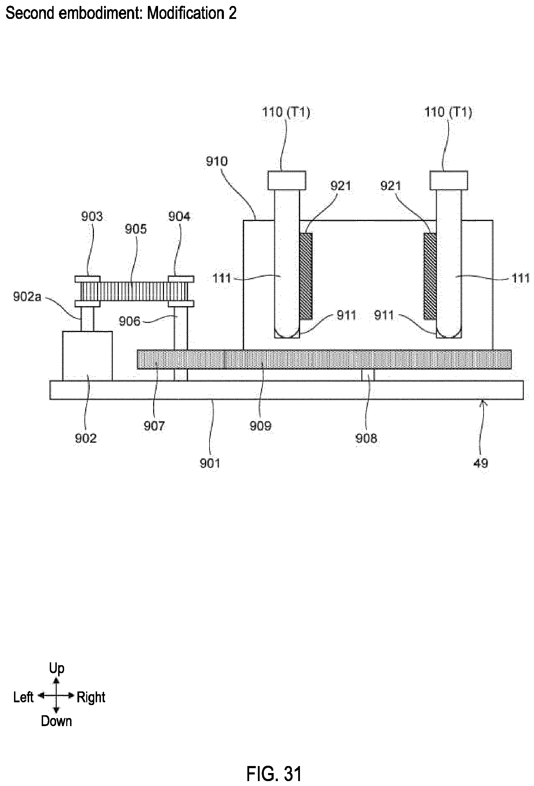

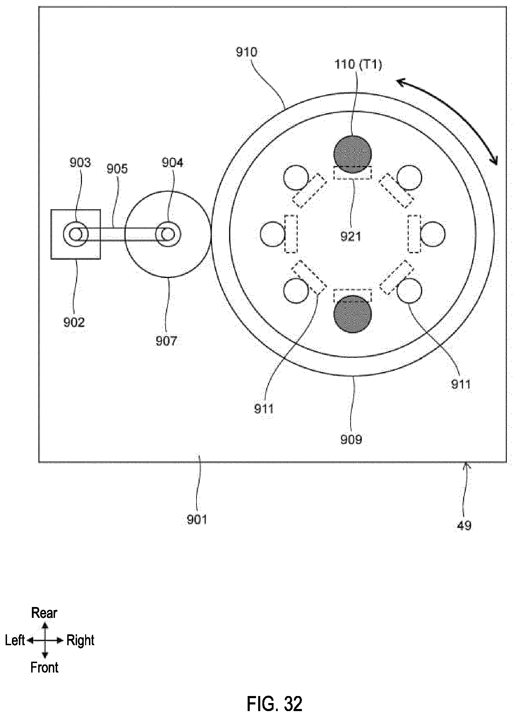

FIGS. 31 and 32 are a side view and a plan view, respectively, schematically showing a detailed configuration of a heating and stirring mechanism 49 according to Modification 2 of the second embodiment. The side view of FIG. 31 shows the inside of the rotating member 910 for convenience.

In Modification 2 of the second embodiment, a heating and stirring mechanism 49 is arranged in the supply device 40 instead of the heating unit 44, the rotating mechanism 45 and the stirring mechanism 46 shown in FIG. 26.

The heating and stirring mechanism 49 includes a substrate 901, a motor 902, pulleys 903 and 904, a belt 905, a shaft 906, a gear 907, a shaft 908, a gear 909, a rotating member 910, and a plurality of Peltier elements 921.

A motor 902 is a stepping motor and is installed on the substrate 901. A shaft 902a of the motor 902 is connected to a pulley 903. Belt 905 is connected to pulleys 903 and 904. Pulley 904 is connected to shaft 906.

The shafts 906 and 908 are connected to the substrate 901 so as to be rotatable with the vertical direction as the central axis. Gears 907 and 909 are fixed to shafts 906 and 908, respectively, and are connected to each other. The rotating member 910 has a cylindrical shape and is installed on the upper surface of the gear 909. A plurality of holders 911 are formed on the upper surface side of the rotating member 910. A plurality of holders 911 are provided along the circumferential direction of the rotating member 910. The holder 911 is a concave portion provided on the upper surface side of the rotating member 910, and holds the container T1 in a vertical state. The Peltier element 921 is provided on the inner surface of the holder 911 and heats the container T1 held by the holder 911.

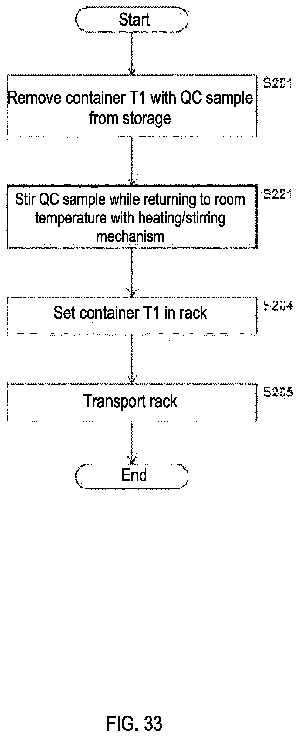

FIG. 33 is a flow chart showing the process of stirring and transporting the container T1 by the supply device 40 according to Modification 2 of the second embodiment.

In FIG. 33, a step S221, in which steps S203 and S204 are combined into one, is added instead of steps S203 and S204 as compared with FIG. 28. The processing of step S221 will be described below.

In step S221 , the control unit 201 of the supply device 40 controls the transfer unit 210 so that the container T1 containing the quality control sample is taken from the storage 42 and set in the holders 911 of the heating and stirring mechanism 49. The control unit 201 controls the motor 902 so that the shafts 902a, 906, and 908 rotate in conjunction with each other, such that the rotating member 910 rotates about the rotational axis of shaft 908. In this way the quality control sample in the container T1 set in the holder 911 is stirred. Simultaneously with the rotation of the rotating member 910, the control unit 201 controls the Peltier device 921 such that the quality control sample in the container T1 set in the holder 911 is heated.

As in the case of the heating unit 44 described above, the heating of the quality control sample by the Peltier element 921 is performed only when the installation temperature of the supply device 40 is lower than the room temperature. When the installation temperature of the supply device 40 is normal temperature, the container T1 is held by the holder 911 for a predetermined time while being stirred by the rotation of the rotating member 910 without being heated by the Peltier element 921.

According to Modification 2 of the second embodiment, since the quality control sample is stirred in advance by preliminary stirring by the heating and stirring mechanism 49 similar to the second embodiment, the stirring prior to measurement by the measuring device 10 ensures the sample can be sufficiently stirred. Since the quality control sample is stirred by applying centrifugal force to the container T1 without inverting the container T1 as in the second embodiment, the space required for stirring is reduced compared to the second embodiment, and, hence, can be rendered more compact. Since the quality control sample in the container T1 can be stirred while being returned to room temperature, the quality control sample can be efficiently heated and stirred.

### Third Embodiment

In the second embodiment, the supply device 40 performs the initial preliminary stirring of the container T1 containing quality control samples taken out from the storage 42. On the other hand, in the third embodiment, preliminary stirring is performed by a stirring device 80 arranged between the supply device 40 and the measuring device 10 . Other controls and other configurations of the third embodiment are the same as those of the second embodiment.

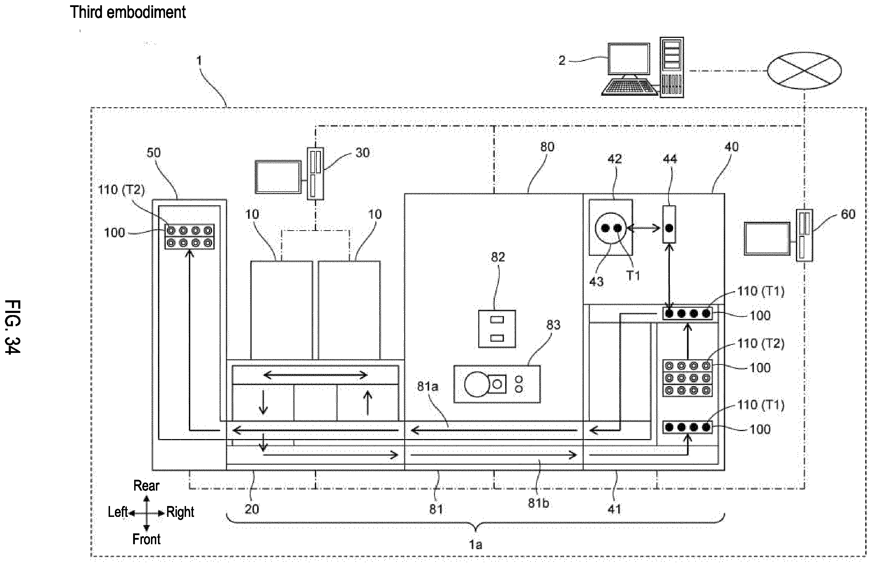

FIG. 34 is a diagram schematically showing a configuration of the sample analysis system 1 according to the third embodiment.

In the third embodiment, it is arranged between the supply device 40 and the transport device 20 as compared to the first embodiment of FIG. 1. In FIG. 34, for the sake of convenience, only one set of the measuring device 10, transport device 20, and control device 30 is provided, but two or more sets may be provided as in the first embodiment.

The stirring device 80 includes a transport unit 81, a stirring mechanism 82, and a rotating mechanism 83. The transport unit 81 includes transport paths 81a and 81b. The transport path 81a transports the rack 100 unloaded from the supply device 40 in the left direction and transports it to the transport device 20 adjacent to the left. The transport path 81b transports the rack 100 unloaded from the transport device 20 adjacent on the left side rightward and unloads it to the supply device 40. The stirring mechanism 82 and the rotating mechanism 83 are respectively configured similarly to the stirring mechanism 46 and the rotating mechanism 45 of the second embodiment shown in FIG. 26.

The rack 100 taken from the storage 42 and transported from the supply device 40 to the transport path 81a is positioned in front of the stirring mechanism 82. The stirring mechanism 82 takes the container T1 from the rack 100 and inverts and stirs the container T1. In the course of stirring by the stirring mechanism 82, the container T1 is set on the rotating mechanism 83 and rotated in the circumferential direction by the rotating mechanism 83. The stirring mechanism 82 takes the container T1 held by the rotating mechanism 83, and resumes inversion stirring. The stirring mechanism 82 returns the stirred container T1 to the original holding unit 101 of the rack 100 on the transport path 81a. When all the containers T1 held by the rack 100 have been preliminarily stirred, the rack 100 is carried to the transport device 20 adjacent to the left.

### Effects of the Embodiments

According to the first through third embodiments, the quality control sample is stirred in the first operation mode which is different from the second operation mode for stirring the subject specimen, and the stirred quality control sample is measured.

According to the first through third embodiments, it is possible to avoid the problem of poor stirring caused by the difference in components and the effect of long-term storage of the quality control sample, which occurs when the quality control sample is stirred in the same manner as the subject specimen, and measurement results can be acquired normally.
A container T1 containing a quality control sample is automatically taken from the storage 42, and the removed container T1 is transported to the measuring device 10. In this way the labor required of the operator can be reduced, and the quality control sample can be measured smoothly.

The storage 42 cools and stores the container T1 containing the quality control sample, and the temperature of the container T1 taken from the storage 42 is increased by the heating unit 44 or the heating and stirring mechanism 49. In this way the quality control sample can be stored with high accuracy, and the quality control sample can be smoothly returned to room temperature during measurement.

The stirring operation performed in the first through third embodiments includes an action of swinging the container 110 containing the quality control sample or the subject specimen in an inverting direction between a first angle in which the bottom of the container is lower than the head and a high second angle in which the bottom is higher than the head. According to this stirring method, the blood cell components that have settled on the bottom of the container 110 can be reliably detached off from the bottom.

Stirring in the first operation mode and stirring in the second operation mode differ in the angle of stirring the container 110 (stirring angle), and the angle of stirring the container 110 in the first operation mode is greater than the angle of stirring the container 110 in the second operation mode. A large stirring angle increases the amount of movement of the liquid components within the container 110, promoting mixing.

Stirring in the first operation mode and stirring in the second operation mode differ in the speed of stirring the container 110 (stirring speed), and the speed of stirring the container 110 in the first operation mode is higher than the speed of stirring the container 110 in the second operation mode. When the inverting speed is high, the moving speed of the liquid component in the container 110 becomes high, and the blood cell component that has settled on the bottom of the liquid component is easily flushed loose. In addition, the swaying of the liquid surface of the liquid component makes it easier for the aggregated blood cell component to declot.

Stirring in the first operation mode and stirring in the second operation mode also differ in the number of times of stirring, and the number of times of stirring in the first operation mode is greater than the number of times of stirring in the second operation mode. When the number of times of stirring is large, the liquid component moves so as to repeatedly push away the blood cell components that have settled to the bottom of the container 110, so that the blood cell components are easily separated from the bottom and mixing of the liquid component and the blood cell components is promoted. Since an external force is repeatedly applied to the blood cell component mixed with the liquid component, the aggregated blood cell components are released and the mixing is promoted.

Stirring in the first operation mode and stirring in the second operation mode also differ in the presence or absence of repeated application of impact. The first mode of operation involves repeatedly impacting the container 110 and the second mode of operation does not involve repeatedly impacting the container 110 . By repeatedly applying impact, the dispersion of aggregated blood cell components contained in the quality control sample is promoted.

Stirring in the first operation mode and stirring in the second operation mode differ in the presence or absence of posture change. The first operation mode includes rotating the container 110 in the circumferential direction during stirring, and the second operation mode does not include rotating the container 110 in the circumferential direction during stirring. In this way it is possible to prevent the components of the quality control sample from aggregating and remaining precipitated at a biased position around the axis in the container 110. Therefore, the quality control sample can be appropriately stirred.

In the second embodiment, the first operation mode for stirring quality control samples and the second operation mode for stirring subject specimens differ in the presence or absence of preliminary stirring, and the first mode of operation includes preliminary stirring and a second mode of operation does not include preliminary stirring. In this way, since the quality control sample is preliminarily stirred prior to the stirring in the second operation mode for the subject specimen, even a quality control sample that is difficult to mix can be sufficiently stirred. Therefore, the quality control sample can be properly measured.

Specifically, the quality control sample is pre-stirred by the stirring mechanism 46, and thereafter stirred in the measuring device 10 in the same manner as in the second operation mode. On the other hand, the subject specimen is stirred in the measuring device 10 in the second operation mode. By preliminary stirring of the quality control sample in this manner, the quality control sample can be supplied to the measuring apparatus 10 in a sufficiently mixed state. Therefore, the measuring device 10 does not need to perform special pretreatment for stirring quality control samples.

According to the first to third embodiments, the measuring device 10 includes an stirring mechanism 410 that grips and oscillates the container 110. In this way the gripping mechanism and the stirring mechanism for removing the container 110 from the rack 100 can be shared, and the device can be simplified.

According to the first through third embodiments, the rotating mechanism 431 is included in the reading unit 430 that reads the identification information printed on the bar code label 112 attached to the side surface of the container 110. In this case, the rotating mechanism 431 is used both for reading the identification information and for stirring the container 110. This eliminates the need to provide a separate rotation mechanism for reading the identification information and stirring the container 110, so that the sample analyzer 1a can be configured simply.

According to the first to third embodiments, the sample analyzer 1a includes the supply device 40 that includes the storage 42 that stores the container T1 containing the quality control sample. The measuring device 10 stirs the quality control sample in the container T1 transported by the transporting device 20 in the first operation mode. As described above, quality control samples taken from the storage 42 may aggregate and precipitate in the container T1. According to the above configuration, since the unstirred quality control sample is stirred in the first operation mode, the unstirred quality control sample can be sufficiently stirred.

According to the first to third embodiments, the transport device 20 transports the container T1 containing the quality control sample measured by the measuring device 10 to the supply device 40, and the supply device 40 stores the container T1 transported from the measuring device 10 by the transport device 20 in the storage 42. According to this configuration, not only the transportation of the container T1 but also the storage of the container T1 are automated, so that the convenience of the sample analyzer 1a and the sample analysis system 1 is further improved.

According to the first through third embodiments, the supply device 40 includes the cooling unit 43 that cools the container T1 in the storage. In this way it is possible to maintain the quality of the quality control sample in the container T1.

According to the first through third embodiments, the supply device 40 includes the heating unit 44 that heats the container T1 taken from the storage. In this way, when the container T1 is kept cool in the storage 42 and the outside air temperature is lower than the temperature suitable for stirring, the temperature of the quality control sample in the container T1 can be quickly raised to a temperature suitable for stirring.

According to the third embodiment, as in the second embodiment, preliminary agitation in the first operation mode is performed on the container T1 containing the quality control sample similar to the second embodiment. Also in this case, since the quality control sample is stirred in advance, the stirring before the measurement in the measuring apparatus 10 ensures the quality control sample is sufficiently stirred. Therefore, the measurement result of the quality control sample can be properly obtained.

Note that instead of the stirring mechanism 82 and the rotating mechanism 83, the support mechanism 47 and the stirring mechanism 48 of FIG. 30 may be provided, and the heating and stirring mechanism 49 of FIG. 31 may be provided. When a stirring mechanism similar to the heating and stirring mechanism 49 is provided, the Peltier element 921 is omitted. Instead of the mechanism for stirring the sample for each container T1 as described above, the samples in the containers 110 held on the rack 100 also may be stirred by at least one of applying vibration to rack 100, and applying centrifugal force to rack 100.

### Other Modification Examples

Although, in the first embodiment, the first operation mode and the second operation mode differ in all parameters such as the number of times of stirring, the angle of stirring, the speed of stirring, the presence or absence of change in posture, and the presence or absence of repeated application of impact, insofar as the parameters of the first operation mode are set so that the quality control sample can be properly stirred, the parameters for the first mode of operation and the parameters for the second mode of operation also may differ in one or a combination of predetermined items in FIG. 15. That is, the first operation mode may differ from the second operation mode in at least one item in FIG. 15. Also, the items of the first operation mode and the second operation mode are not limited to the items shown in FIG. 15, and may be one or more combinations of these items.

Although, in the second embodiment, the parameters for preliminary stirring in the first operation mode and the parameters for the second operation mode are different in all items such as the number of times of stirring, the stirring angle, the stirring speed, the presence or absence of posture change, and the presence or absence of repeated impact application, insofar as the parameters of the first operation mode are set so that the quality control sample can be properly stirred, the parameters for preliminary stirring in the first operation mode and the parameters for the second operation mode may be different or the same in one or a predetermined combination of items in FIG. 25. Although the parameters for stirring by the measuring device 10 in the first operation mode and the parameters for stirring in the second operation mode were the same, insofar as the parameters for the first operation mode were set so that the quality control sample could be properly stirred, the operation mode of stirring by the measuring device 10 in the first operation mode and the second operation mode may differ in one or a combination of predetermined items among the parameters in FIG. 25. Also, the items of the first operation mode and the second operation mode are not limited to the items shown in FIG. 15, and may be one or more combinations of these items.

In the second embodiment, as shown in FIG. 25, the intensity of preliminary stirring performed by the supply device 40 in the first operation mode is set higher than the intensity of stirring performed by the measuring device 10 in the first operation mode. However, the present invention is not limited to this configuration; if the first operation mode for stirring the quality control sample provides stronger stirring than the second operation mode for stirring the subject sample, the intensity of preliminary stirring in the first operating mode and the intensity of stirring of the measuring device 10 in the first operating mode may be equal, and the strength of preliminary stirring in the first operating mode may be lower than the strength of stirring of the measuring device 10 in the first operating mode. When the above conditions are satisfied, the intensity of each stirring in the first operation mode may be weaker or stronger than the intensity of stirring in the second operation mode for stirring the subject sample.

Note that, in the above embodiments, although the stirring in the first operation mode is stronger compared to the stirring in the second operation mode, insofar as the quality control sample can be properly stirred by the stirring in the first operation mode, the stirring in the first operation mode should be different from the stirring in the second operation mode. For example, in order to appropriately stir the quality control sample by stiring in the first operation mode, each stirring parameter in the first operation mode and each stirring parameter in the second operation mode may be the same, and the waiting time from one inversion stirring to the next inversion stirring may be set longer in the first operation mode than in the second operation mode. Further, the stirring in the first operation mode may be set weaker than the stirring in the second operation mode so that the blood cell components of the quality control sample are not damaged during the stirring.

In the second embodiment, as shown in FIG. 25, the first operation mode is composed of two types of stirring: preliminary stirring performed by the supply device 40 and stirring performed by the measuring device 10 . However, the stirring according to the first mode of operation may consist of three or more stirrings. For example, the first operation mode may consist of preliminary stirring performed by the supply device 40, stirring performed for the first time by the measuring device 10, and stirring performed for the second and subsequent times by the measuring device 10.

In second embodiment, the parameters of the preliminary stirring performed by the supply device 40 may be changed according to the length of time the quality control sample has been stored in the storage 42. For example, when the quality control sample has been stored in the storage 42 for 0 hours, it is considered that precipitation has hardly progressed in the container T1, and the preliminary stirring parameters are set in the same manner as in the second mode of operation for the subject specimen as shown in FIG. 25. On the other hand, when the quality control sample has been stored in the storage 42 for a long time, it is considered that the precipitation will be completed after a predetermined time has passed, such that the preliminary stirring is set to gradually increase in strength until a predetermined time elapses, and the preliminary stirring is set to the same strength as in FIG. 25 after the predetermined time has elapsed.

In the modification 2 of the first embodiment, and the second embodiment, the invert angles θ1 for the first and second operation modes were set smaller than 90°, and the invert angles θ2 for the first and second operation modes were set larger than 90°, as shown in FIGS. 15, 18, and 25. That is, according to the first and second operation modes, the container 110 was oscillated between a position at which the bottom of the container 110 was lower than the head, and a position at which the bottom of the container 110 was higher than the head. However, if the stirring in the first operation mode for stirring quality control samples is stronger than the stirring in the second operation mode for stirring subject specimens, both the invert angles θ1 and θ2 may be smaller than 90°, or both the invert angles θ1 and θ2 may be larger than 90°, depending on the type of sample. However, when θ1<90° and θ2>90° as described above, the sample in the container 110 can be effectively stirred.

The stirring mechanism 410 in FIG. 7 and the stirring mechanism 46 in FIG. 27 stir the sample in the container 110 is not limited to oscillating the container 110 in the inversion direction. For example, the stirring mechanisms 410 and 46 may stir the sample by moving the container 110 in the longitudinal direction (vertical direction), stir the sample by moving the container 110 in the lateral direction (horizontal direction), and stir by rotating the container 110 about a longitudinal (vertical) axis passing through the center of the container 110. Also, these stirrings may be combined.

Stirring mechanism 410 in FIG. 7 rotated container 110 about axis 513, and stirring mechanism 46 in FIG. 27 rotated container 110 about axis 733. That is, the stirring mechanisms 410 and 46 rotated the container 110 about only one axis. However, the present invention is not limited to this configuration inasmuch as the stirring mechanisms 410 and 46 may be configured to rotate the container 110 about two or more axes. For example, the stirring mechanisms 410 and 46 may be configured to perform first stirring by oscillating the container 110 in a first direction, and second stirring by oscillating the container 110 in a second direction different from the first direction. This eliminates the need to transfer the container 110 from the stirring mechanism to the rotating mechanism to rotate the container 110 in the circumferential direction by the rotating mechanism during stirring.

In the first embodiment, the sample analyzer 1a (see FIG. 1) does not necessarily have the supply device 40. For example, the operator may manually set the rack 100 holding the container T1 or the rack 100 holding the container T2 on the transport device 20. In this case, the operator removes the container T1 containing the quality control sample from a separately installed storage, sets the removed container T1 on the rack 100, and manually sets the rack 100 on the transport device 20.

In step S13 of FIG. 17, the control unit 31 determines which of the containers T1 and T2 is the container 110 to be stirred, based on the sample ID read by the barcode reader 322c of the reading unit 322. However, the present invention is not limited to this configuration inasmuch as the control unit 31, after removing the container 110 from the rack 100 and before starting stirring by the stirring mechanism 410, may read the sample ID with the barcode reader 432 of the reading unit 430 and determine the type of the target container 110 based on the read ID. Alternatively, the control unit 31 may acquire the type of the container 110 to be stirred by inquiring of the transport control device 60.

The rack 100 holding the containers T1 containing the quality control samples was transported in a rightward direction and collected by the supply device 40 when all the containers T1 held in the rack 100 were processed. However, the present invention is not limited to this configuration, and when the use of the container T1 ends after one transport, and when the processing of all the containers T1 ends, the rack 100 may be transported leftward and collected by the collection device 50 in the same manner as the rack 100 holding the subject specimen.

The cooling unit 43 includes a Peltier device for cooling, but may be an evaporative compression type cooling device including a compressor. The heating unit 44 has a Peltier element for heating, but may have a heater instead. The heating and stirring mechanism 49 has a Peltier element 921 for heating, but may have a heater instead.

As shown in FIG. 6 , the stirring mechanism 410 that takes the container 110 from the take-out position 323 and stirs the container 110 is installed at a position different from the reading unit 430. However, without being limited to this, a mechanism for taking out the container 110 from the take-out position 323 and a mechanism for stirring the container 110 may be provided separately, and the mechanism for stirring may be arranged at the position of the reading unit 430. In this case, since the mechanism for stirring and the rotating mechanism 431 are arranged at the same position, stirring and rotation of the container 110 can be quickly switched.

An RFID tag storing a rack ID may be attached to the rack 100 instead of the barcode label 102, and an RFID tag storing a sample ID may be attached to the container 110 instead of the barcode label 112. In this case, instead of the barcode reader, an antenna for reading the RFID is arranged.

The sample analyzer 1a is a device for measuring and analyzing whole blood collected from a subject as a subject sample, but may be a device for measuring and analyzing other samples collected from a subject. Other specimens include, for example, plasma, cerebrospinal fluid, interstitial fluid, and urine. Also in this case, the measurement accuracy of the subject specimen as described above is managed using the quality control sample.

The embodiments of the present invention can be appropriately modified in various ways within the scope of the technical idea indicated in the scope of claims.

The present disclosure includes following items:
[Item 1] A quality control sample measurement method for measuring quality control samples that have been stored in a cold state, the method comprising:
   a step of stirring the quality control sample in a first operation mode; and
   a step of measuring the stirred quality control sample,
   wherein the stirring in the first operation mode is a stirring method different from the stirring method in a second operation mode for stirring a subject sample collected from a subject.
[Item 2] The quality control sample measurement method according to item 1, wherein
   the stirring in the first operation mode and the stirring in the second operation mode differ in at least one of the number of times of stirring, the stirring angle, the stirring speed, the presence/absence of repeated impacts, the presence/absence of posture change, and the presence/absence of preliminary stirring.
[Item 3] The quality control sample measurement method according to item 1 or 2, wherein the stirring by the first operation mode is enhanced as compared with the stirring by the second operation mode.
[Item 4]The quality control sample measurement method according to any one of items 1 to 3, further comprising:
   a step of automatically removing the container from the storage that stores the container containing the quality control sample; and
   a step of transporting the removed container to a measuring device.
[Item 5] The quality control sample measurement method according to item 4, wherein the container containing the quality control sample is cooled while stored in storage; and
   the method further comprises
   a step of raising a temperature of the container removed from the storage.
[Item 6] The quality control sample measurement method according to any one items 1 to 5, wherein
   the stirring comprises oscillating the container containing the quality control sample or the subject sample between a first angle at which a bottom part of the container is lower than a top part and a second angle in which the bottom part is higher than the top part.
[Item 7] The quality control sample measurement method according to item 6, wherein
   the stirring in the first operation mode and the stirring in the second operation mode differ in an angle through which the container is oscillated; and
   a first angle through which the container is oscillated in the first operation mode is larger than a second angle through which the container is oscillated in the second operation mode.
[Item 8] The quality control sample measurement method according to item 6 or 7, wherein
   the stirring in the first operation mode and the stirring in the second operation mode differ in an oscillation speed at which the container is oscillated; and
   a first oscillation speed at which the container is oscillated in the first operation mode is larger than a second oscillation speed at which the container is oscillated in the second operation mode.
[Item 9]The quality control sample measurement method according to any one of items 1 to 8, wherein
   the first operation mode and the second operation mode differ in a number of times of stirring; and
   a first number of times of stirring in the first operation mode is larger than a second number of times of stirring in the second operation mode.
[Item 10] The quality control sample measurement method according to any one of items 1 to 9, wherein
   the stirring in the first mode of operation comprises applying an impact to the container; and
   the stirring in the second operation mode does not include applying an impact to the container.
[Item 11] The quality control sample measurement method according to any one of items 1 to 10, wherein
   the stirring in the first operation mode includes rotating the container in the circumferential direction during stirring; and
   the stirring in the second operation mode does not include rotating the container in the circumferential direction during stirring.
[Item 12] The quality control sample measurement method according to any one of items 1 to 11, wherein
   the first operation mode and the second operation mode differ in presence or absence of preliminary stirring;
   the stirring in the first operation mode includes the preliminary stirring; and the stirring in the second operation mode does not include the preliminary stirring.
[Item 13] The quality control sample measurement method according to item 12, wherein
   the preliminary stirring includes at least one of grasping and oscillating the container, applying vibration to the container, and applying centrifugal force to the container.
[Item 14] A sample analyzer comprising:
   a transport device that transports containers; and
   a measuring device configured to stir a sample in the container transported by the transport device and measure the stirred sample;
   wherein the measuring device stirs a quality control sample in the container in a first operation mode when the container transported by the transport device accommodates a quality control sample;
   wherein the measuring device stirs a subject sample in the container in a second operation mode when the container transported by the transport device accommodates a subject sample; and
   wherein stirring in the first operation mode is different from the stirring in the second operation mode.
[Item 15] The sample analyzer according to item 14, wherein
   the stirring in the first operation mode and the stirring in the second operation mode differ in at least one of stirring operation, number of stirrings, stirring angle, stirring speed, presence/absence of impact, method of presence/absence of posture change, and presence/absence of preliminary stirring.
[Item 16] The sample analyzer according to item 14 or 15, wherein
   the stirring in the first operation mode is enhanced as compared with the stirring in the second operation mode.
[Item 17] The sample analyzer according to any one of items 14 to 16, wherein
   the measuring device includes a stirring mechanism for grasping and oscillating the container.
[Item 18] The sample analyzer according to item 17, wherein
   the measuring device includes a rotation mechanism for rotating a container in a circumferential direction; and
   the rotation mechanism rotates the container in a circumferential direction during stirring of the quality control sample in the first operation mode.
[Item 19] The sample analyzer according to item 18, wherein
   the rotation mechanism is included in a reading unit that reads identification information attached to the side surface of the container.
[Item 20] The sample analyzer according to any one of items 14 to 19, wherein
   when the quality control sample that has been stirred in the first operation mode is stirred again before the measurement, the measuring device stirs the quality control sample with a weaker stirring than the stirring in the first operation mode.
[Item 21] The sample analyzer according to any one of items 14 to 20, wherein
   when the quality control sample that has been stirred in the first operation mode is stirred again before the measurement, the measuring device stirs the quality control sample with a strength corresponding to an elapsed time from previous stirring.
[Item 22] The sample analyzer according to any one of items 14 to 21, further comprising:
   a supply device including a storage for storing the container containing a quality control sample;
   wherein the transport device transports the container taken out of the storage by the supply device to the measuring device; and
   the measuring device stirs the quality control sample in the container transported from the supply device in the first operation mode.
[Item 23] The sample analyzer according to item 22, wherein
   the transport device transports the container containing a quality control sample measured by the measuring device to the supply device; and
   the supply device stores the container transported from the measuring device by the transport device in the storage.
[Item 24] The sample analyzer according to item 22 or 23, wherein
   the supply device includes a cooling unit for cooling the container in the storage.
[Item 25] The sample analyzer according to any one of items 22 to 24, wherein
   the supply device includes a heating unit for heating the container taken out from the storage.
[Item 26] A supply device that supplies a quality control sample to a measuring device that measures a sample, the supply device comprising:
   a storage for cooling and storing the container containing the quality control sample;
   a stirring mechanism for stirring the quality control sample in the container taken out from the storage; and
   a take-out unit for taking out the container containing the quality control sample stirred by the stirring mechanism to a transport path toward the measuring device.
[Item 27] The supply device according to item 26, further comprising:
   a heating unit for heating the container taken out of the storage.
[Item 28] The supply device according to item 26 or 27, wherein
   the stirring mechanism grips and oscillates the container.
[Item 29] The supply device according to item 28, further comprising:
   a rotation mechanism for rotating the container in a circumferential direction during stirring by the stirring mechanism.

## Claims

1. A quality control sample measurement method for measuring quality control samples that have been stored in a cold state, the method comprising:
a step of stirring the quality control sample in a first operation mode; and
a step of measuring the stirred quality control sample,
wherein the stirring in the first operation mode is a stirring method different from the stirring method in a second operation mode for stirring a subject sample collected from a subject.

2. The quality control sample measurement method according to claim 1, wherein
the stirring in the first operation mode and the stirring in the second operation mode differ in at least one of the number of times of stirring, the stirring angle, the stirring speed, the presence/absence of repeated impacts, the presence/absence of posture change, and the presence/absence of preliminary stirring.

3. The quality control sample measurement method according to claim 1 or 2, wherein
the stirring by the first operation mode is enhanced as compared with the stirring by the second operation mode.

4. The quality control sample measurement method according to any one of claims 1 to 3, further comprising:
a step of automatically removing the container from the storage that stores the container containing the quality control sample; and
a step of transporting the removed container to a measuring device.

5. The quality control sample measurement method according to claim 4, wherein
the container containing the quality control sample is cooled while stored in storage; and
the method further comprises
a step of raising a temperature of the container removed from the storage.

6. The quality control sample measurement method according to any one of claims 1 to 5, wherein
the stirring comprises oscillating the container containing the quality control sample or the subject sample between a first angle at which a bottom part of the container is lower than a top part and a second angle in which the bottom part is higher than the top part.

7. The quality control sample measurement method according to claim 6, wherein
the stirring in the first operation mode and the stirring in the second operation mode differ in an angle through which the container is oscillated; and
a first angle through which the container is oscillated in the first operation mode is larger than a second angle through which the container is oscillated in the second operation mode.

8. The quality control sample measurement method according to claim 6 or 7, wherein
the stirring in the first operation mode and the stirring in the second operation mode differ in an oscillation speed at which the container is oscillated; and
a first oscillation speed at which the container is oscillated in the first operation mode is larger than a second oscillation speed at which the container is oscillated in the second operation mode.

9. The quality control sample measurement method according to any one of claims 1 to 8, wherein
the first operation mode and the second operation mode differ in a number of times of stirring; and
a first number of times of stirring in the first operation mode is larger than a second number of times of stirring in the second operation mode.

10. The quality control sample measurement method according to any one of claims 1 to 9, wherein
the stirring in the first mode of operation comprises applying an impact to the container; and
the stirring in the second operation mode does not include applying an impact to the container.

11. The quality control sample measurement method according to any one of claims 1 to 10, wherein
the stirring in the first operation mode includes rotating the container in the circumferential direction during stirring; and
the stirring in the second operation mode does not include rotating the container in the circumferential direction during stirring.

12. The quality control sample measurement method according to any one of claims 1 to 11, wherein
the first operation mode and the second operation mode differ in presence or absence of preliminary stirring;
the stirring in the first operation mode includes the preliminary stirring; and
the stirring in the second operation mode does not include the preliminary stirring.

13. The quality control sample measurement method according to claim 12, wherein
the preliminary stirring includes at least one of grasping and oscillating the container, applying vibration to the container, and applying centrifugal force to the container.

14. A sample analyzer comprising:
a transport device that transports containers; and
a measuring device configured to stir a sample in the container transported by the transport device and measure the stirred sample;
wherein the measuring device stirs a quality control sample in the container in a first operation mode when the container transported by the transport device accommodates a quality control sample;
wherein the measuring device stirs a subject sample in the container in a second operation mode when the container transported by the transport device accommodates a subject sample; and
wherein stirring in the first operation mode is different from the stirring in the second operation mode.

15. The sample analyzer according to claim 14, further comprising:
a supply device including a storage for storing the container containing a quality control sample;
wherein the transport device transports the container taken out of the storage by the supply device to the measuring device; and
the measuring device stirs the quality control sample in the container transported from the supply device in the first operation mode.

16. The sample analyzer according to claim 14 or 15, wherein
the supply device includes a cooling unit for cooling the container in the storage.

17. The sample analyzer according to any one of claims 14 to 16, wherein
the supply device includes a heating unit for heating the container taken out from the storage.
